(19) Europäisches Patentamt / European Patent Office / Office européen des brevets

(11) **EP 2 302 898 A2**

(12) **EUROPEAN PATENT APPLICATION**

(43) Date of publication:
**30.03.2011 Bulletin 2011/13**

(51) Int Cl.:
*H04N 1/60* (2006.01)

(21) Application number: **10178668.9**

(22) Date of filing: **23.09.2010**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO SE SI SK SM TR**<br>Designated Extension States:<br>**BA ME RS** | (72) Inventors:<br>• **Hoshii, Jun**<br>  **Nagano 392-8502 (JP)**<br>• **Nakajima, Hisanori**<br>  **Nagano 392-8502 (JP)** |
| (30) Priority: **24.09.2009 JP 2009219602** | (74) Representative: **Kastel, Stefan et al**<br>**Flügel Preissner Kastel Schober**<br>**Nymphenburger Strasse 20a**<br>**80335 München (DE)** |
| (71) Applicant: **Seiko Epson Corporation**<br>**Shinjuku-ku**<br>**Tokyo (JP)** | |

(54) **A printing apparatus, a printing method, and a computer-readable recording medium recording a printing program thereon**

(57) Disclosed is a printing apparatus including an obtaining unit that obtains an image and spectral characteristics, a printing unit that prints the image and patches showing the spectral characteristics while associating them with each other, and a consideration request unit that transmits a consideration request for the printing based on a comparison of the spectral characteristics and spectral characteristics obtained by measuring colors of the patches. The consideration request is based on a certification notification with respect to measured spectral characteristics of the patches pointed.

## FIG. 4

```
ENTIRE PROCEDURE
      │
      ▼
IMAGE INPUT PROCESS          S100
      │
      ▼
PRINTING PROCESS             S200
      │
      ▼
MEASUREMENT PROCESS          S300
      │
      ▼
CERTIFICATION PROCESS        S400
      │
      ▼
REQUEST AND
SETTLEMENT PROCESS           S500
      │
      ▼
     END
```

**Description**

BACKGROUND

1. Technical Field

The present invention relates to a printing apparatus, a printing method, and a computer-readable recording medium which records a program thereon so that the program prompts a computer to function as the printing apparatus.

2. Related Art

There is proposed an on-demand printing system in which when printing is needed, a customer requests as much printing as is needed and a price is charged corresponding to the amount of printing (refer to JP-A-2006-146687).

However, it is problematic in that the quality of a quantity of printed matter may not satisfy the requirements of a consumer, and the consumer has to purchase a quantity of printed matter of an unintended quality. Particularly, when an art object such as a picture is reproduced using a quantity of printed matter, the requirements for the reproducibility of the art object are high and the requirements of the consumer may not be satisfied.

In addition, as a further demand, the provider that provides the reproduced art object desires to prevent duplicates of low reproducibility from being exhibited or distributed.

SUMMARY

An advantage of some aspects of the invention is to provide a print operator terminal (a printing apparatus in the claims) capable of guaranteeing the reproducibility of a reproduced image.

In a certification system including a print operator terminal according to an embodiment of the invention, the print operator terminal, a certifier terminal, and a consumer terminal are communicably connected to one another. In the certification system, first, an image data obtaining unit provided in the print operator terminal obtains image data including pixels for which spectral characteristics of a target object to be reproduced have been designated. A printing unit provided in the print operator terminal prints a reproduction image based on the image data and a plurality of certification patches, for which the spectral characteristics have been designated, while associating them with each other. A measurement data obtaining unit provided in the print operator terminal obtains measurement data by measuring the spectral characteristics of the certification patches. Next, a measurement data transmission unit provided in the print operator terminal transmits the measurement data to the certifier terminal.

Then, a measurement data reception unit provided in the certifier terminal receives the measurement data. Next, a certification unit provided in the certifier terminal determines whether the certification of the reproduction image associated with the certification patches is possible on the basis of a comparison of the spectral characteristics of the measurement data and the spectral characteristics designated for the certification patches. When it is determined that the certification of the reproduction image is possible, a notification unit provided in the certifier terminal transmits a notification, which indicates that the certification of the reproduction image is possible, to the print operator terminal. In addition, a payment request unit provided in the certifier terminal transmits a payment request to the consumer terminal. Then, a reception unit provided in the print operator terminal receives the notification, which indicates that the certification of the reproduction image is possible, on the basis of the measurement data. Next, a consideration request unit provided in the print operator terminal transmits a consideration request for the printing of the reproduction image to the consumer terminal. Meanwhile, a settlement unit provided in the consumer terminal receives the payment request and the consideration request, and performs settlement with respect to the payment request and the consideration request.

With such a configuration, the certification of the reproduction image may be performed on the basis of the comparison of the spectral characteristics of the measurement data and the spectral characteristics designated for the certification patches, and reproducibility of the reproduction image may be guaranteed. Since the settlement is performed for the certifier terminal having performed the certification in response to the payment request, the certifier terminal may obtain the consideration for the certification (license). Meanwhile, since the settlement also is performed for the print operator terminal having performed the printing in response to the consideration request, the print operator terminal may obtain the consideration for the printing of the certified reproduction image.

Reproducibility of spectral reflectance is one example of the spectral characteristics evaluated in the certification. If the reproducibility of spectral reflectance of the target object to be reproduced may be certified in the reproduction image, it may be possible to guarantee that the reproduction image is obtained, such that a color equal to that of the target object to be reproduced is shown, even under certain light sources. A color value is one example of the spectral characteristics evaluated in the certification. If it is possible to certify that a color under a reference light source of the target object to be reproduced is reproduced by the reproduction image under a designated light source, it may be possible to guarantee color reproducibility with respect to the reproduction image under the designated light source. It is preferable that the certification patch has the distinctive spectral characteristics of the reproduction image. When the target object to be reproduced is a picture drawn using pigments, it may be considered that the spectral characteristics of the target object to be reproduced are distinctive due to the pigment. In such a case, the certification patch is given the spectral characteristics of the pigment, resulting in the realization of certification with high reliability.

There is an appropriate printing scheme when printing is performed by a printing apparatus that prints the reproduction image and the certification patch by allowing a plurality of inks to adhere to a recording medium. That is, the printing unit specifies the ink amount of the inks, which are adhered to the recording medium by the printing apparatus with respect to each pixel of the image data, by referring to a look-up table which defines the correspondence relation of the spectral characteristics and the ink amount of the inks adhering to the recording medium. Particularly, when the spectral characteristic is the spectral reflectance, the look-up table is a table in which the ink amount is specified for each spectral reflectance defined by a combination of reluctances in a plurality of wavelength sections. Meanwhile, as a scheme for performing printing without using the look-up table, the ink amount of the inks for reproducing the spectral characteristics of each pixel of the image data may be specified based on a spectral characteristic prediction model. In addition, since the reproduction image to be certified is reproduced based on the image data, it is preferable that certification is also performed for the image data.

Moreover, the technical scope of the invention can be realized by a detailed apparatus and a method performed by the apparatus. That is, the invention can be specified as a certification method including processes corresponding to each unit performed by the above-described certification system. Of course, when the above-described certification apparatus reads a program and realizes the above-described units, it goes without saying that the technical scope of the invention can be realized by a program for executing functions corresponding to the units, or various recording media on which the program is recorded.

Any combinations of the above-mentioned embodiments, where appropriate, are within the scope of the present invention.

## BRIEF DESCRIPTION OF THE DRAWINGS

The invention will be described with reference to the accompanying drawings, wherein like numbers reference like elements.

Fig. 1 is an entire configuration diagram of a certification system.

Fig. 2 is a block diagram showing the hardware configuration of a computer.

Fig. 3 is a block diagram showing the software configuration of the certification system shown in Fig. 1.

Fig. 4 is a flowchart of an entire procedure performed by the certification system shown in Fig. 1.

Fig. 5 is a flowchart of an image input process.

Fig. 6 is a schematic diagram showing the configuration for generating correction data.

Fig. 7 is a diagram showing the configuration for measuring the spectral reflectance of a picture.

Fig. 8 is a flowchart showing a printing process.

Fig. 9 is a layout of patch data (image data) for certification.

Fig. 10 is a diagram showing a 3D-LUT.

Fig. 11 is a schematic diagram showing a printing scheme of a printer.

Fig. 12 is a flowchart of a measurement process.

Fig. 13 is a flowchart of a certification process.

Fig. 14 is a flowchart of a request and settlement process.

Fig. 15 is a diagram showing a spectral reflectance database.

Figs. 16A and 16B are diagrams showing a spectral Neugebauer model.

Figs. 17A to 17C are diagrams showing a cellular Yule-Nielsen Spectral Neugebauer Model.

Fig. 18 is a schematic diagram of a spectral reflectance-ink amount table.

Fig. 19 is a flowchart of a creating process of a spectral reflectance-ink amount table.

Fig. 20 is a diagram showing the software configuration of a certification system in accordance with a modified example.

## DESCRIPTION OF EXEMPLARY EMBODIMENTS

Hereinafter, an embodiment of the present invention will be described according to the following sequence.

A. Entire Configuration
B. Image Input Process
C. Printing Process
D. Measurement Process

E. Certification Process
F. Request and Settlement Process
G. Spectral Printing Model
H. Modified Example
H1. First Modified Example
H2. Second Modified Example

A. Entire Configuration

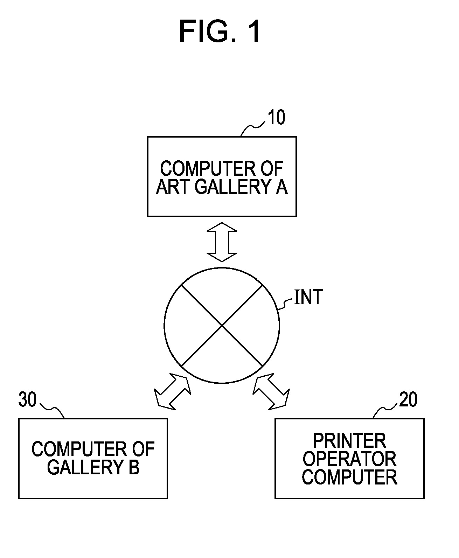

Fig. 1 is a diagram schematically showing computers and a network constituting a certification system including a computer 20 of a print operator according to this embodiment of the invention. Referring to Fig. 1, the certification system includes at least a computer 10 of an art gallery A, a computer 20 of a print operator, and a computer 30 of an art gallery B, and the computers 10, 20 and 30 are communicably connected to one another through an Internet INT. In this embodiment, the computers 10, 20 and 30 are connected to one another through the Internet INT. However, for example, another communication medium (a communication protocol) such as a wired/wireless phone line may be interposed into the whole or a part of a communication line.

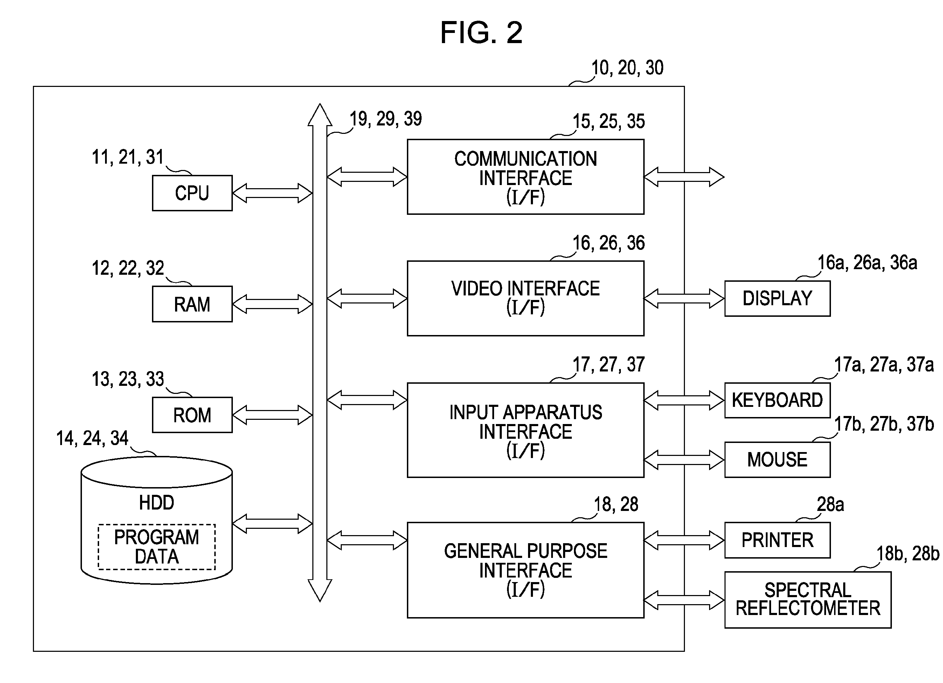

Fig. 2 shows one example of the hardware configuration of each of the computers 10, 20 and 30. The computers 10, 20 and 30 in accordance with this embodiment have a substantially identical hardware configuration. The computer 10 includes a CPU 11, a RAM 12, a ROM 13, a hard disk drive (HDD) 14, a communication interface (I/F) 15, a video interface (I/F) 16, an input device interface (I/F) 17, a general purpose interface (I/F) 18, and a bus 19. The computer 20 includes a CPU 21, a RAM 22, a ROM 23, a HDD 24, a communication I/F 25, a video I/F 26, an input device I/F 27, a general purpose I/F 28, and a bus 29. The computer 30 includes a CPU 31, a RAM 32, a ROM 33, a HDD 34, a communication I/F 35, a video I/F 36, an input device I/F 37, and a bus 39. The CPUs 11, 21 and 31 develop program data stored in the ROMs 13, 23 and 33 and the HDDs 14, 24 and 34 to the RAMs 12, 22 and 32, and perform an operation for executing processes or functions which will be described later, respectively. The communication I/Fs 15, 25 and 35 provide mediation for connecting the computers 10, 20 and 30 to the Internet INT, respectively.
The video I/Fs 16, 26 and 36 perform a process for outputting an image on external displays 16a, 26a and 36a. The input device I/Fs 17, 27 and 37 receive an operation through external keyboards 17a, 27a and 37a and external mice 17b, 27b and 37b, and transmit signals based on the operation to the CPUs 11, 21 and 31, respectively.

The general purpose I/F 18 of the computer 10 of the art gallery A provides an interface for connecting the computer to an external spectral reflectometer 18b. The general purpose I/F 28 of the computer 20 of the print operator provides an interface for connecting the computer 20 to an external printer (a printing apparatus) 28a and an external spectral reflectometer 28b. These elements 11 to 18, 21 to 28 and 31 to 37 are communicably connected to one another through the buses 19, 29 and 39, and can perform a collaborative process by communicating with one another. The art gallery B exhibits a reproduced image PI of a picture D owned by the art gallery A for a constant period through an "art gallery A exhibition", and the picture D owned by the art gallery A corresponds to a target object to be reproduced in accordance with this embodiment of the invention. In addition, the computer 10 of the art gallery A, the computer 20 of the print operator, and the computer 30 of the art gallery B are provided in a single number. However, there may be more than one art gallery A, print operator, and art gallery B, and the computers 10, 20 and 30 may be provided in a plural number in correspondence with the number of the art galleries A, the number of the print operators, and the number of the art galleries B, respectively.

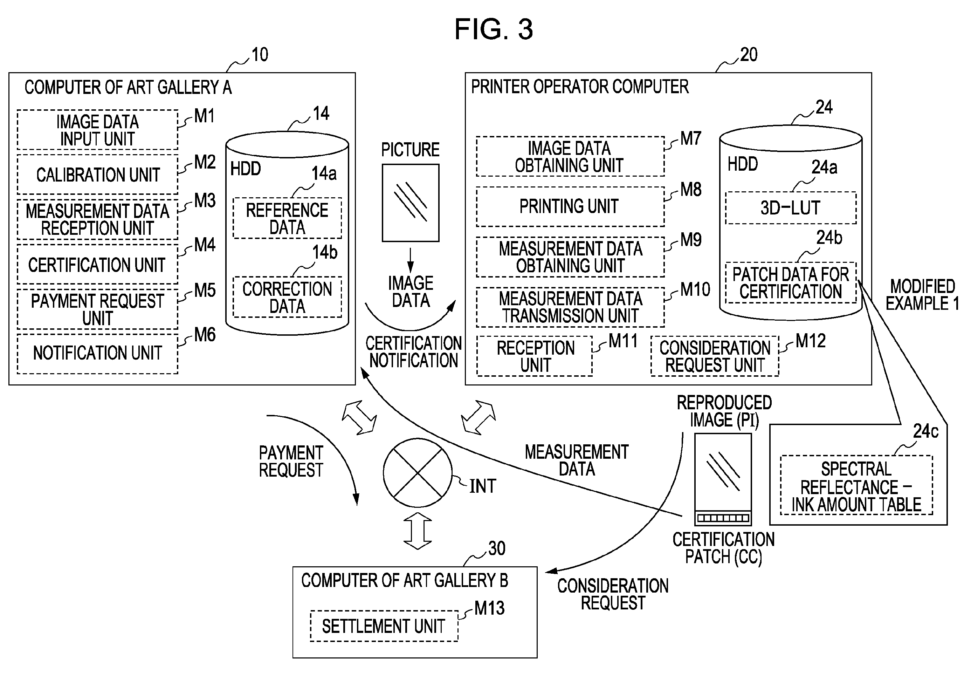

Fig. 3 shows the software configuration and main data controlled by the computers 10, 20 and 30. In the computer 10 of the art gallery A, an image data input unit M1, a calibration unit M2, a measurement data reception unit M3, a certification unit M4, a payment request unit M5, and a notification unit M6 are controlled. In the computer 20 of the print operator, an image data obtaining unit M7, a printing unit M8, a measurement data obtaining unit M9, a measurement data transmission unit M10, a reception unit M11, and a consideration request unit M12 are controlled. In the computer 30 of the art gallery B, a settlement unit M13 is controlled. Processes performed by each of the software modules M1 to M13 will be described in detail later.

B. Image Input Process

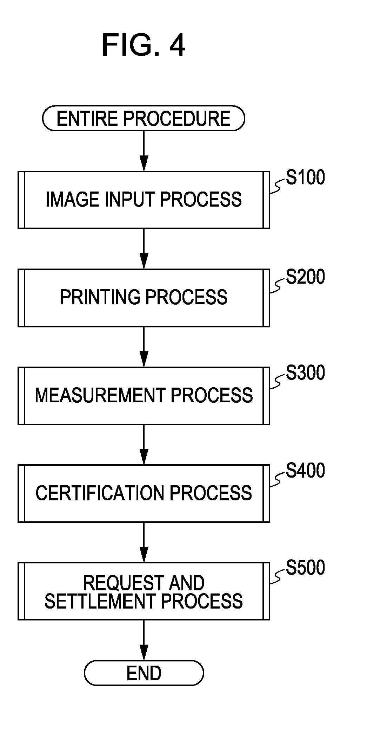

Fig. 4 schematically shows the flow of an entire procedure performed by the certification system in Fig. 1. In this embodiment, first, the computer 10 of the art gallery A performs the image input process (step S100), thereby obtaining image data ID. Next, the computer 20 of the print operator performs the printing process (step S200) of printing the reproduced image PI and certification patches CC, and further performs the measurement process (step S300) of measuring the spectral characteristics of the certification patches CC. Then, the computer 30 of the art gallery B performs the certification process (step S400). Last, the request and settlement process (step S500) is performed among the computer 10 of the art gallery A, the computer 20 of the print operator, and the computer 30 of the art gallery B. Before the certification system performs each process which will be described later, the art gallery B places an order with the art gallery A and the print operator for the reproduced image PI of the picture D owned by the art gallery A. This order may be electronically transmitted to the art gallery A, or may also be transmitted to the art gallery A by a letter and the like. In relation to the order, information for specifying the picture D, the size of the reproduced image PI, a light source (a designated light source) when the art gallery B exhibits the reproduced image PI, and information for specifying a reproduction mode of the reproduced image PI are transmitted to the art gallery A and the print operator. As the reproduction mode of the reproduced image PI, any one of a spectral reflectance mode and a color value mode is designated. When the order is electronically transmitted to the art gallery A, order data including the above-described information is transmitted to the computer 10 of the art gallery A and the computer 20 of the print operator from the computer 30 of the art gallery B. Hereinafter, the entire procedure will be sequentially described starting from the image input process (step S100).

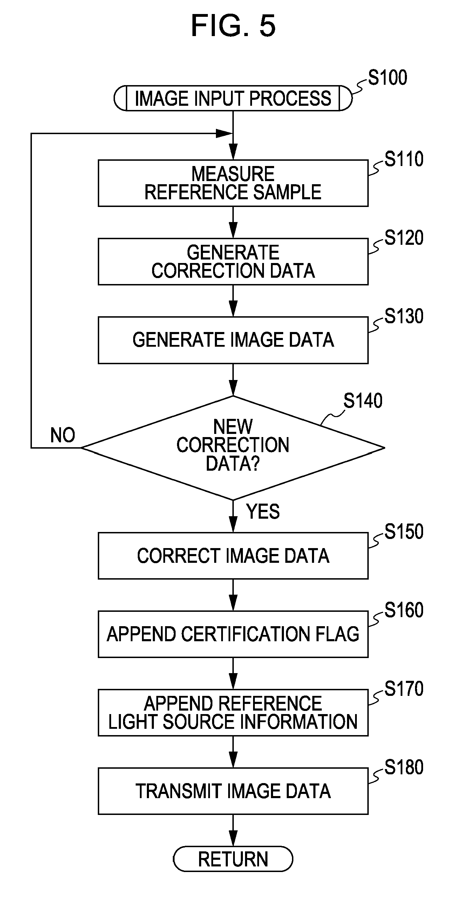

Fig. 5 shows the flow of the image input process. The image input process is performed by the computer 10 of the art gallery A having received the order, specifically, by the image data input unit M1 and the calibration unit M2. In step S110, the spectral reflectometer 18b measures the spectral reflectances $R(\lambda)$ of a reference sample. The spectral reflectances $R(\lambda)$ obtained by measuring the reference sample are written as confirmation spectral reflectances $R_c(\lambda)$. In addition, the spectral reflectances $R(\lambda)$ represent a reflectance group when irradiating lights having a plurality of wavelength sections in a visible wavelength band. The spectral reflectances $R(\lambda)$ of the reference sample are written as reference spectral reflectances $R_i(\lambda)$. The reference spectral reflectances $R_i(\lambda)$ have been previously determined, and reference data 14a including the reference spectral reflectances $R_i(\lambda)$ is stored in the HDD 13. In step S120, the calibration unit M2 generates correction data 14b.

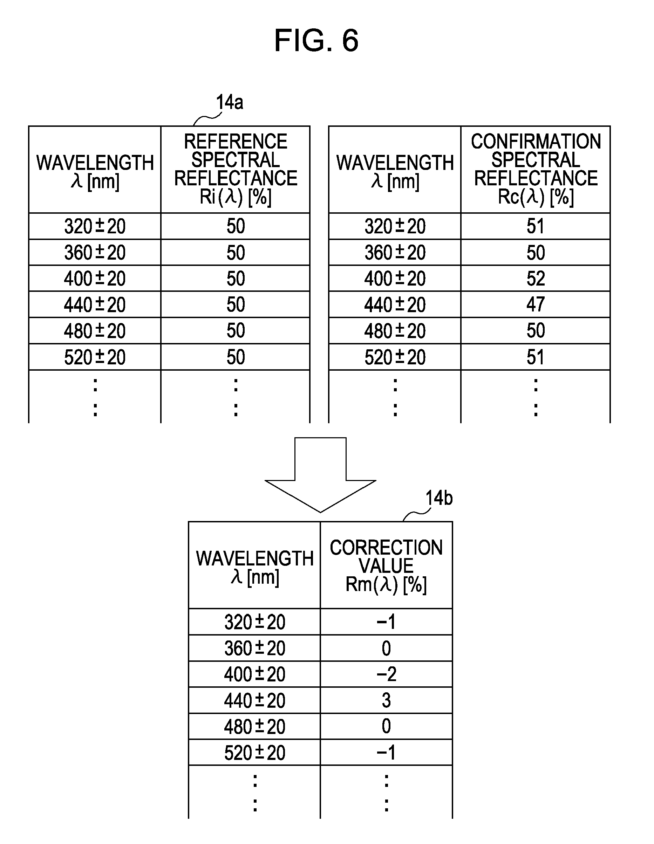

Fig. 6 schematically shows the configuration for generating the correction data 14b. Herein, correction values $R_m(\lambda)$, which are obtained by subtracting the confirmation spectral reflectances $R_c(\lambda)$ from the reference spectral reflectances $R_i(\lambda)$ with respect to each wavelength section, are stored as the correction data 14b. In addition, the generation dates of the correction data 14b are appended to the correction data 14b. In step S130, the image data input unit M1 measures the spectral reflectances $R(\lambda)$ of the picture D as a target object to be reproduced, thereby generating the image data ID. In addition, in relation to the correction data 14b of this embodiment, the correction values $R_m(\lambda)$ are provided for each wavelength section. However, in relation to the correction data 14b, the correction values $R_m(\lambda)$ may also be provided for each combination of each wavelength section and each spectral reflectance $R(\lambda)$. In addition, tilt levels (primary differential values) obtained by differentiating the spectral reflectances $R(\lambda)$ by wavelengths or secondary differential values obtained by differentiating the tilt levels by the wavelengths are combined with each combination of each wavelength section and each spectral reflectance $R(\lambda)$, and the correction values $R_m(\lambda)$ are provided for each of these combinations, so that the correction data 14b may also be created as 3D to 4D-LUTs.

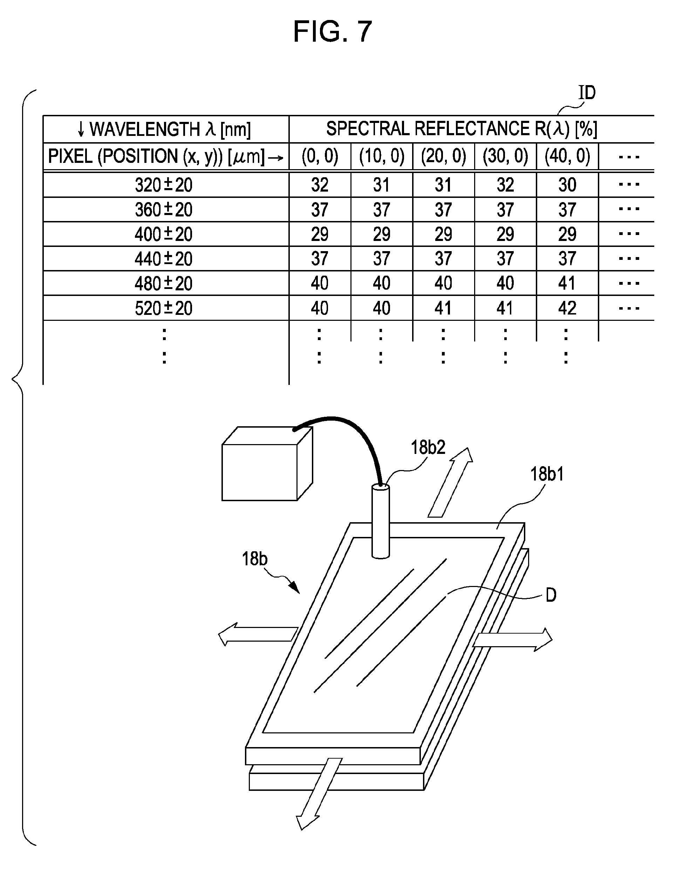

Fig. 7 is a diagram showing the configuration for measuring the spectral reflectance $R(\lambda)$ of the picture D and generating the image data ID. As shown in Fig. 7, the spectral reflectometer 18b has a stage 18b1, and the picture D is loaded on the stage 18b1. The stage 18b1 can be driven along an XY axis in the horizontal direction and the driving amount of the stage 18b1 is obtained with respect to the XY direction. Whenever portions of the picture D facing a fixed measurement probe 18b2 are changed little by little as the stage 18b1 moves in the XY direction, the spectral reflectometer 18b measures the spectral reflectances $R(\lambda)$ of each portion. The spectral reflectances $R(\lambda)$ of each portion are sequentially stored in each pixel associated with the driving amount of the stage 18b1, thereby completing the generation of the image data ID in which each pixel existing in coordinates of the XY direction specified by the driving amount has the spectral reflectance $R(\lambda)$. By reducing the pitch of the driving amount in the XY direction of the stage 18b1, the resolution of the image data ID can be increased.

In step S140, the calibration unit M2 calculates the difference between the current date and the generation date of the correction data 14b and determines whether the difference exceeds a predetermined threshold value (e.g., 10 days). When the difference exceeds the threshold value, step S110 is performed and the correction data 14b is generated anew. When the difference does not exceed the threshold value, step S150 is performed. In step S150, the calibration unit M2 corrects the spectral reflectances $R(\lambda)$ by adding the correction values $R_m(\lambda)$ to the spectral reflectances $R(\lambda)$ of each pixel of the image data ID. Thus, the spectral reflectances $R(\lambda)$ of the image data ID are corrected. In addition, the calibration unit M2 appends a certification flag to the image data ID (step S160), wherein the certification flag indicates that correction based on appropriate correction data 14b has been performed. That is, it is certified that the image data ID has been corrected based on new correction data 14b. Furthermore, the calibration unit M2 appends reference light source information to the image data ID (step S170), wherein the reference light source information specifies a light source (a reference light source) under which the picture D is exhibited in the art gallery A. After the image data ID is generated as described above, the image data input unit M1 transmits the image data ID to the computer 20 of the print operator (step S180).

C. Printing Process

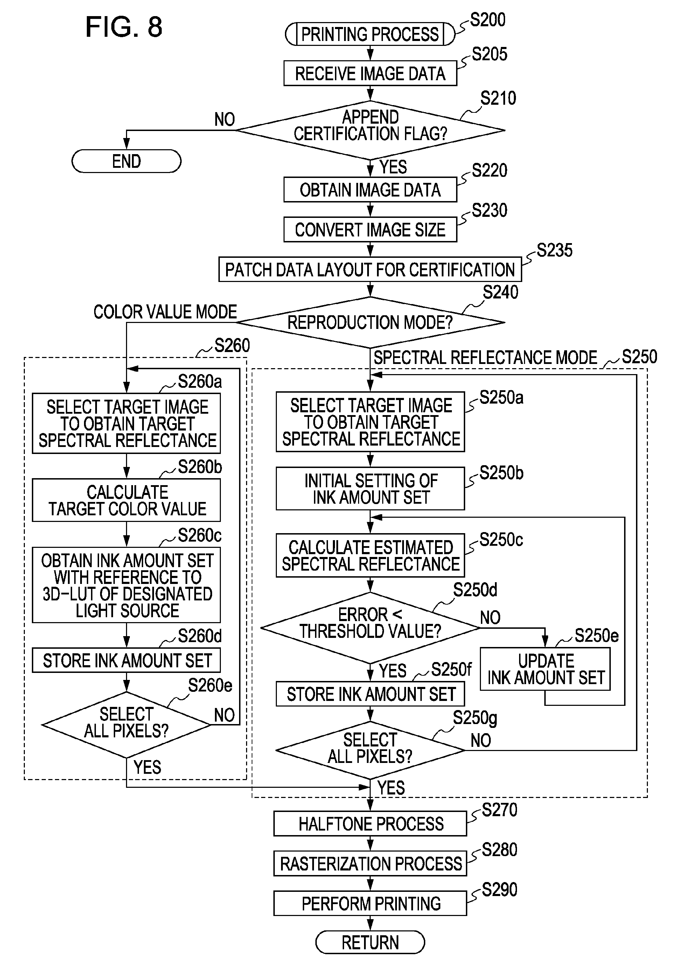

Fig. 8 is a flowchart showing the printing process.
The printing process is performed in the computer 20 of the print operator, which has received the order, specifically, by the image data obtaining unit M7 and the printing unit M8. In step S205, the image data is received. In step S210, the image data obtaining unit M7 determines whether the certification flag has been appended to the image data ID. That is, it is confirmed whether the correction based on the appropriate correction data 14b has been performed with respect to the image data ID. When the certification flag has not been appended to the image data ID, the printing process is ended. In this way, it is possible to prevent the reproduction image PI from being printed based on the image data ID in which the spectral reflectances R(λ) have not been appropriately corrected. In this embodiment, correction of the image data ID based on new correction data 14b serves as certification conditions of the image data ID. When the certification flag has been appended to the image data ID, step S220 is performed. In step S220, the image data obtaining unit M7 obtains the image data ID transmitted from the computer 10 of the art gallery A. In step S230, the printing unit M8 converts the image size of the image data ID. In the above-described order, the size of the reproduction image PI is transmitted to the print operator, and the image size of the image data ID is converted based on the magnification of the size of the reproduction image PI and the print resolution of the printer 28a. In the case of reducing the size, thinning-out and the like are performed. In the case of enlarging the size, pixels are inserted into the image data ID. The inserted pixels also include spectral reflectances R(λ) similarly to other pixels, but the spectral reflectances R(λ) are determined by an interpolation operation based on spectral reflectances R(λ) of adjacent pixels. In step S235, the image data ID is laid out together with patch data 24b for certification.

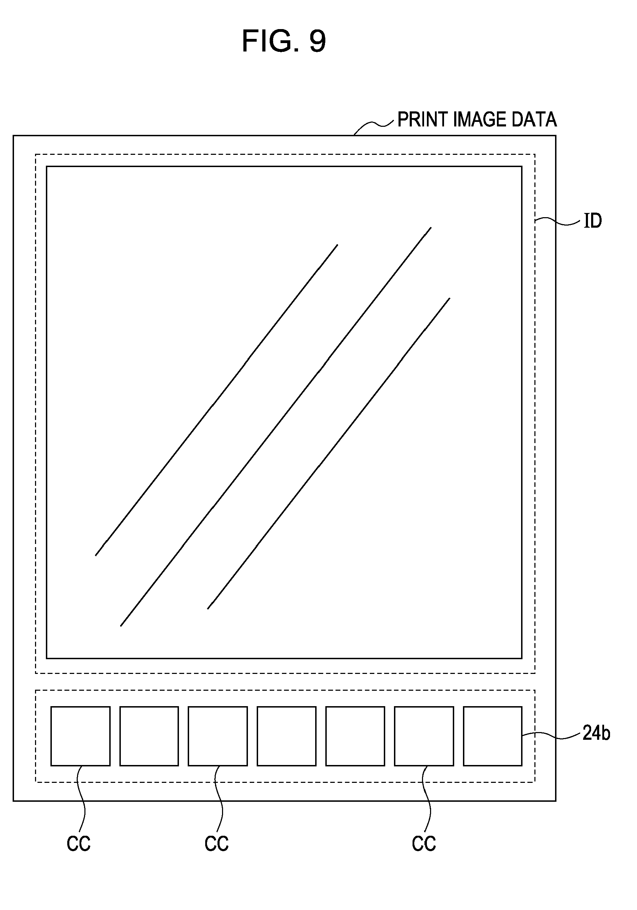

Fig. 9 shows the configuration of the layout in step S235. Herein, the image data ID having the converted size is allocated to an area of a printing paper having a predetermined size on which printing is performed, and the patch data 24b for certification stored in the HDD 23 is allocated to a blank space to which the image data ID is not allocated. The patch data 24b for certification is image data in which each pixel has spectral reflectance R(λ) similarly to the image data ID. In relation to the patch data 24b for certification, pixels having the same spectral reflectance R(λ) are distributed in an area having a rectangular shape. Thus, it is possible to reproduce color patches (certification patches CC) having a rectangular shape. Spectral reflectances R(λ) designated for each certification patch CC are obtained by measuring spectral reflectances R(λ) of a sample coated with pigments used for drawing the picture D. Usually, since pigments with a plurality of colors are used, a plurality of certification patches CC are formed. Since repairs are carried out in the case of an old picture D, the spectral reflectances R(λ) may be obtained by measuring a sample coated with pigments used at the time of the repair. Image data, to which the image data ID and the patch data 24b for certification are allocated, is written as print image data.
In step S240, the printing unit M8 performs the following diverging branched processes according to the reproduction mode of the reproduction image PI. When the reproduction mode of the reproduction image PI is a spectral reflectance mode, the printing unit M8 performs a color conversion process of converting the spectral reflectances R(λ) of each pixel into ink amount sets φ which are a combination of ink amounts of CMYKlclm inks, which are ejected onto a printing paper by the printer 28a, in step S250. Herein, the ink amount sets φ, with which the spectral reflectances R(λ) of each pixel are reproducible, are calculated using a spectral printing model which will be described later. According to the spectral printing model, as any ink amount set # is input, spectral reflectances R(λ) are output which are predicted to be reproduced on a printing paper when the printer 28a performs printing based on the ink amount set φ. Using the spectral printing model, the ink amount sets φ may not be calculated in reverse from the spectral reflectances R(λ) with which each pixel is reproducible. In this regard, in this embodiment, the printing unit M8 performs the following color conversion process, thereby sequentially obtaining the ink amount sets φ with which the spectral reflectances R(λ) of each pixel are reproducible.
First, target pixels, for example, are selected in a pixel arrangement sequence, and the spectral reflectances R(λ) of the target pixels are obtained as target spectral reflectances $R_t(λ)$ (step S250a). Next, an appropriate ink amount set φ is initially set in the spectral printing model (step S250b), and spectral reflectances R(λ) calculated by the initial setting are obtained as prediction spectral reflectances $R_s(λ)$ (step S250c). The printing unit M8 determines whether an error (e.g., a Euclidean distance in spaces separated by wavelength sections) between the target spectral reflectances $R_t(λ)$ and the prediction spectral reflectances $R_s(λ)$ is smaller than a predetermined threshold value (step S250d). In addition, the threshold value is small to the extent that the target spectral reflectances $R_t(λ)$ may be regarded to be equal to the prediction spectral reflectances $R_s(λ)$. When the error is larger than the threshold value, the ink amount set φ is updated (step S250e), and the printing unit M8 returns to step S250c. That is, the printing unit M8 determines whether the error is smaller than the threshold value with respect to the updated ink amount set φ. When the error is equal to or less than the threshold value, the current ink amount set φ is employed as a solution and the ink amount set φ is stored in the target pixel (step S250f). After the ink amount set φ is stored in the target pixel, the printing unit M8 determines whether all pixels have been selected as the target pixel (step S250g). In the event that not all the pixels have been selected, the printing unit M8 returns to step S250a and performs a process of obtaining a solution of an ink amount set φ with respect to the next target pixel. In addition, since it is highly probable that adjacent pixels have similar target spectral reflectances $R_t(\lambda)$, a solution of an ink amount set φ with respect to a just previous pixel may be initially set with respect to the current target pixel in step S250b. In this way, the number of updates of an ink amount set φ can be reduced. When all the pixels have been selected as the target pixel, the color conversion process is ended. In relation to the update of the ink amount set φ in step S250e, for example, it may also be possible to update the ink amount set φ by using Newton's method using the Jacobian matrix having matrix elements obtained by partially differentiating each wavelength component of spectral reflectances $R(\lambda)$ by means of each component of the ink amount set φ.

Meanwhile, when the reproduction mode of the reproduction image PI is a color value mode, the printing unit M8 performs a color conversion process based on color values in step S260. Herein, an ink amount set φ is calculated, with which color values when observing an object of spectral reflectances $R(\lambda)$ of each pixel under a reference light source are reproducible under a designated light source. First, a target pixel is selected and spectral reflectances $R(\lambda)$ of the target pixel are obtained (step S260a). Next, color values (target color values TCV) from the object when irradiating light of the reference light source onto the object of the obtained spectral reflectances $R(\lambda)$ are calculated (step S260b). In detail, the spectral reflectances $R(\lambda)$ are multiplied by spectral energy of the reference light source, and a color-matching function corresponding to a tristimulus value of a cone is further convoluted to the spectral reflectances $R(\lambda)$, so that XYZ values are calculated. The XYZ values are converted into L*a*b values of a CIELAB color space, so that the L*a*b values are calculated as the target color values TCV. The target color value TCV represents a color value recognized by an observer when the picture D is exhibited in the art gallery A under the reference light source. After the target color values TCV are calculated, ink amount sets φ, with which the target color values TCV are reproducible under the designated light source, are obtained (step S260c). Herein, the ink amount sets φ corresponding to the target color values TCV are obtained with reference to a 3D-LUT 24a in which the correspondence relation between the target color values TCV and the ink amount sets φ is provided for a plurality of lattice points. In addition, this embodiment uses the image data ID in which each pixel has the spectral reflectances $R(\lambda)$ of the picture D. However, in the case of the color value mode, it may be possible to use image data ID in which each pixel has color values (target color values TCV) of the picture D under the reference light source.

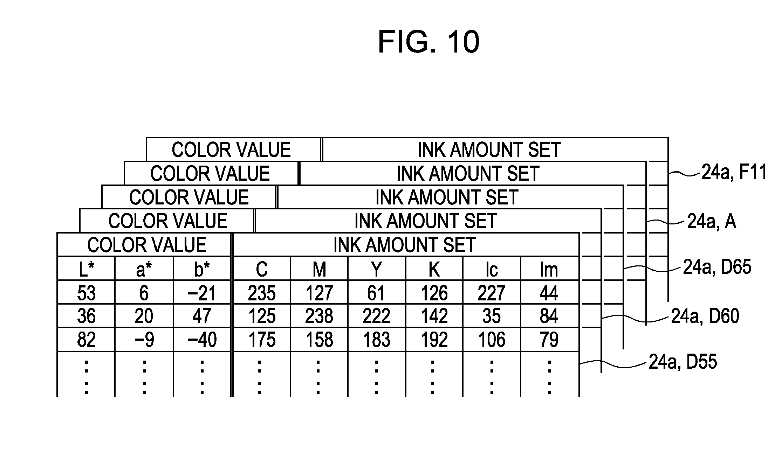

Fig. 10 shows the 3D-LUT 24a. The 3D-LUT 24a indicates table data in which the correspondence relation between the target color values TCV and the ink amount sets φ is provided for lattice points substantially uniformly existing in the CIELAB color space serving as an input color space. An interpolation operation is performed with respect to peripheral lattice points based on the correspondence relation between the target color values TCV and the ink amount sets φ, so that ink amount sets φ corresponding to any target color values TCV are calculated. The 3D-LUT 24a is stored in the HDD 24, and is individually prepared for each of a plurality of designated light sources. This is because an ink amount set φ for reproducing the same target color value TCV varies depending on the designated light source. For example, when the designated light source is a light source D50, a 3D-LUT 24a created by measuring colors of color patches or estimating a reproduction color under the light source D50 is used. After the ink amount set φ is calculated as described above, the ink amount set φ is stored in the target pixel (step S260d). After the ink amount set φ is stored in the target pixel, the printing unit M8 determines whether all pixels have been selected as the target pixel (step S260e). In the event that not all the pixels have been selected, the printing unit M8 returns to step S260a and performs a process of obtaining an ink amount set φ with respect to the next target pixel. When all the pixels have been selected as the target pixel, the color conversion process is ended. In this way, the print image data, in which each pixel has spectral reflectances $R(\lambda)$, can be converted into ink amount image data in which each pixel has an ink amount set φ.

In step S270, the printing unit M8 performs a halftone process with respect to the ink amount image data. For example, ink amount sets φ of 255 grayscale are made into low-level grayscales (grayscales indicating whether dots of a single size or dots of a plurality of sizes can be ejected) by using a dither method or an error diffusion method. In addition, in step S280, a rasterization process is performed to allocate the halftone data obtained through the halftone process to each path or each nozzle of a print head provided in the printer 28a. In this way, print control data available for the printer 28a can be created. In step S290, the printer 28a performs printing based on the print control data. Consequently, the reproduction image PI and the certification patches CC can be printed on the printing paper previously set in the printer 28a.

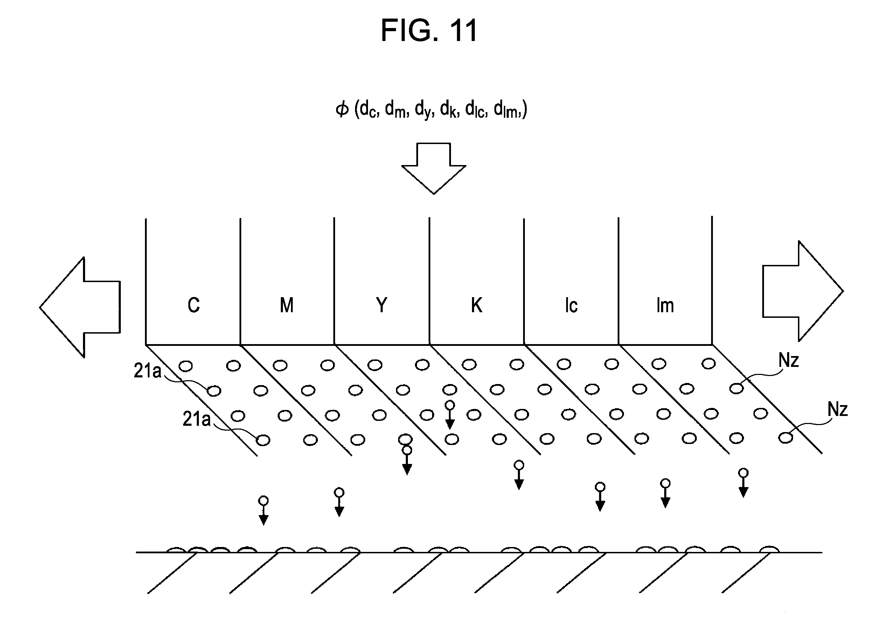

Fig. 11 schematically shows a printing scheme of the printer 28a in this embodiment. The printer 28a includes a print head HD provided with a plurality of nozzles Nz for each ink of CMYKlclm, and control is performed based on print data PD to employ ink amounts of each ink of CMYKlclm ejected from the nozzles Nz as amounts designated by the above-described ink amount sets φ ($d_c$, $d_m$, $d_y$, $d_k$, $d_{lc}$ and $d_{lm}$). Ink droplets ejected from each nozzle Nz adhere to the printing paper as fine dots, and a printed image having ink area coverage according to the ink amount sets φ ($d_c$, $d_m$, $d_y$, $d_k$, $d_{lc}$ and $d_{lm}$) resulting from the collection of a plurality of dots is formed on the printing paper.

The printing result of the reproduction image PI and the certification patches CC based on the image data ID and the patch data 24b for certification is equal to the layout shown in Fig. 9. In this embodiment, the reproduction image PI and the certification patches CC are printed on the same printing paper, so that the reproduction image PI and the certification patches CC are associated with each other. However, the reproduction image PI and the certification patches CC are not always printed on the same printing paper. For example, it may be possible to print a common and unique identification number or barcode on the reproduction image PI and the certification patches CC. However, since color reproduction characteristics of the printer 28a change as time passes, it is preferable that a printing interval between the reproduction image PI and the certification patches CC is as short as possible. When the reproduction mode of the reproduction image PI is the spectral reflectance mode, spectral reflectances $R(\lambda)$ identical to those of the picture D are reproduced on the reproduction image PI, and spectral reflectances $R(\lambda)$ equal to those of coating surfaces of pigments used for drawing the picture D are reproduced on the certification patches CC. Meanwhile, when the reproduction mode of the reproduction image PI is the color value mode, if the reproduction image PI and the certification patches CC are observed under the designated light source of the art gallery B, a color value is obtained which is equal to the color value recognized when observing the picture D and the coating surfaces of the pigments used for drawing the picture D under the reference light source of the art gallery A. If the printing process is ended, the measurement process is subsequently performed by the computer 20 of the print operator.

D. Measurement Process

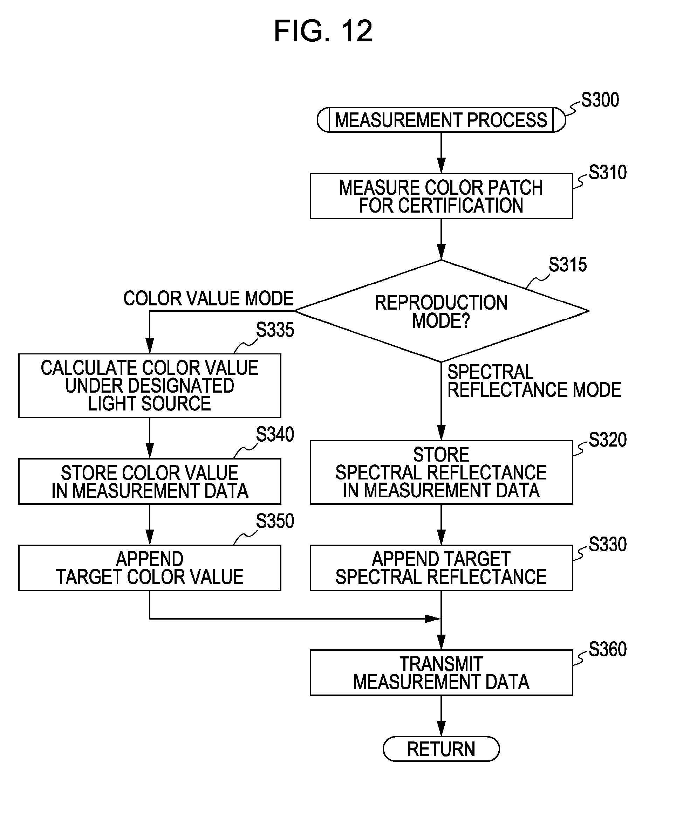

Fig. 12 is a flowchart of the measurement process. The measurement data obtaining unit M9 measures the spectral reflectances $R(\lambda)$ of each printed certification patch CC by using the spectral reflectometer 28b (step S310). When the reproduction mode of the reproduction image PI is the spectral reflectance mode (step S315), measurement data MD including spectral reflectances $R(\lambda)$ obtained by measuring the certification patches CC is generated (step S320). In step S330, the measurement data obtaining unit M9 appends the target spectral reflectances $R_t(\lambda)$ when performing the color conversion process with respect to pixels corresponding to each certification patch CC to the measurement data MD as target data TD. Meanwhile, when the reproduction mode of the reproduction image PI is the color value mode, color values when irradiating light of the designated light source with the spectral reflectances $R(\lambda)$ obtained by measuring he certification patches CC are calculated (step S335), and measurement data MD including the calculated color values is generated (step S340). By the use of calculation equivalent to the calculation of the target color value TCV in step S260b, the color values can be calculated. However, spectral energy of the designated light source may be used instead of spectral energy of the reference light source. In addition, in this embodiment, the spectral reflectances $R(\lambda)$ are measured and the color values under the designated light source are indirectly obtained. However, it may be possible to directly obtain color values through color measurement of a colorimeter after irradiating light of the designated light source onto the reproduction image PI. In step S350, the measurement data obtaining unit M9 appends the target color value TCV when performing the color conversion process with respect to the pixels corresponding to each certification patch CC to the measurement data MD as the target data TD. In step S360, the measurement data transmission unit M10 transmits the measurement data MD to the computer 10 of the art gallery A, and ends the measurement process.

E. Certification Process

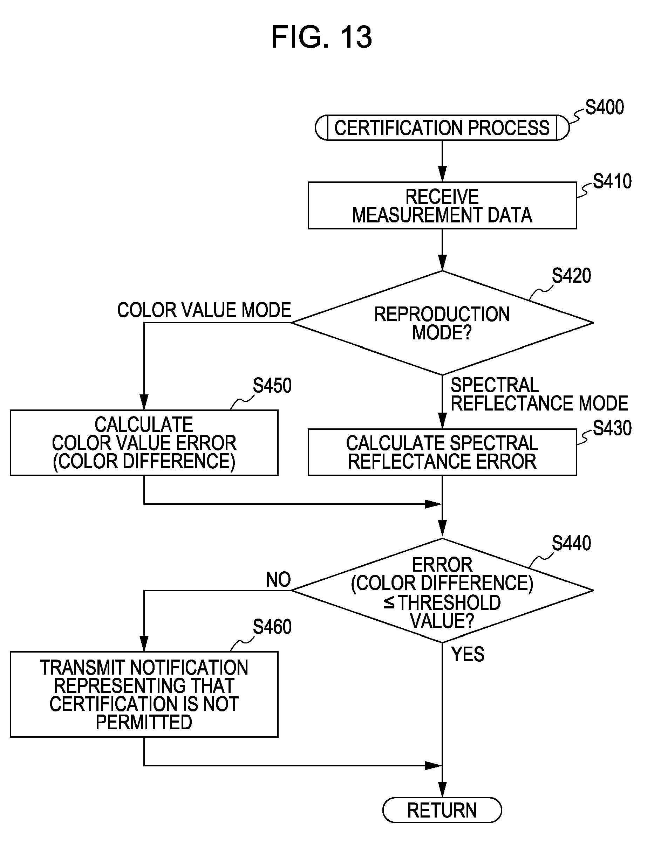

Fig. 13 is a flowchart of the certification process performed by the certification unit M4 of the computer 10 of the art gallery A. In step S410, the measurement data reception unit M3 receives the measurement data MD. In step S420, the certification unit M4 determines the reproduction mode of the reproduction image PI based on the target data TD appended to the measurement data MD. That is, if the measurement data MD includes the target spectral reflectances $R_t(\lambda)$, the certification unit M4 determines that the reproduction mode of the reproduction image PI is the spectral reflectance mode. If the measurement data MD includes the target color value TCV, the certification unit M4 determines that the reproduction mode of the reproduction image PI is the color value mode. When the reproduction mode of the reproduction image PI is the spectral reflectance mode, the certification unit M4 calculates an error (e.g., a Euclidean distance in spaces separated by wavelength sections) between the target spectral reflectances $R_t(\lambda)$ included in the target data TD and measured spectral reflectances $R(\lambda)$ with respect to each certification patch CC (step S430). Then, the certification unit M4 decides whether certification is possible based on the errors of each certification patch CC (step S440). Herein, the possibility of the certification may be decided based on the comparison of the target spectral reflectances $R_t(\lambda)$ included in the target data TD and the measured spectral reflectances $R(\lambda)$, and various certification criteria may be used. For example, it may be possible to calculate an average value of the errors of each certification patch CC and decide that the certification is possible when the average value is less than a predetermined threshold value. Instead of a simple average value, the possibility of the certification may also be decided based on a value obtained by multiplying each certification patch CC by different weights and linearly combining the certification patches CC with one another. A hue (pigments), on which reproducibility is considered, is designated by the art gallery A, and a large weight may be applied to the error of the certification patch CC corresponding to the designated pigment. Furthermore, when the maximum value of the error is less than a predetermined threshold value, it may be decided that the certification is possible. In addition, when a standard deviation of the errors of each certification patch CC is less than the predetermined threshold value, it may also be decided that the certification is possible.

Meanwhile, when the reproduction mode of the reproduction image PI is the color value mode, the certification unit M4 calculates an error (e.g., color difference of a CIE1976) between the target color value TCV included in the target data TD and a measured color value with respect to each certification patch CC (step S450). Then, in step S440, the certification unit M4 decides whether certification is possible based on the errors of each certification patch CC. Herein, basically, when the error is small, it is decided that the certification is possible, and various certification criteria may be used. When it is decided that the certification is impossible, the notification unit M6 provides a notification, which indicates that the certification is impossible, to the computer 20 of the print operator and the computer 30 of the art gallery B (step S460). After receiving the notification, the computer 20 of the print operator performs calibration of the printer 28a, and performs the printing process again. Meanwhile, when it is decided that the certification is possible, the request and settlement process is performed.

F. Request and Settlement Process

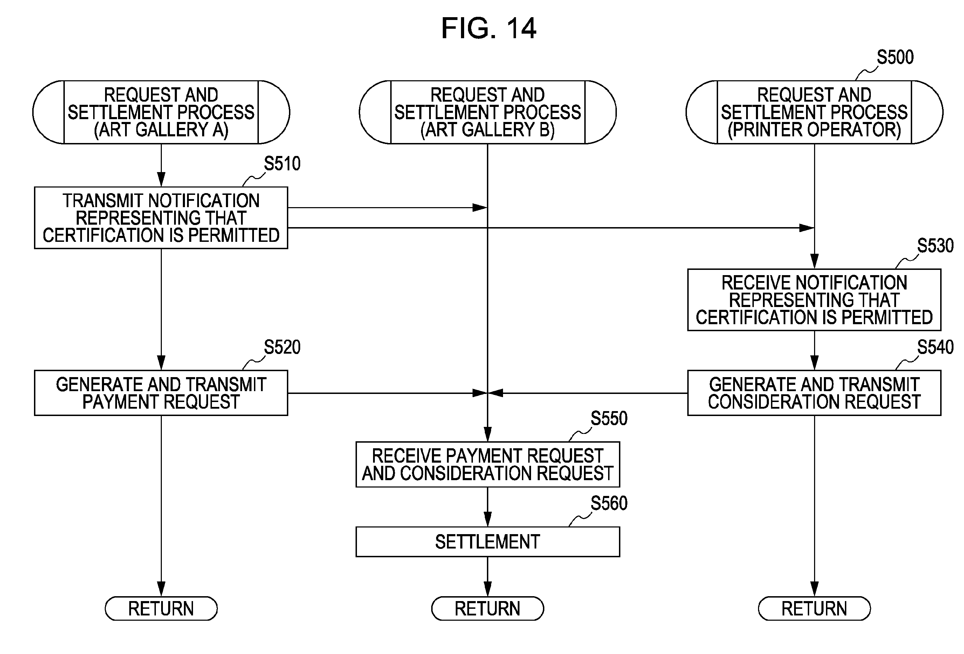

Fig. 14 is a flowchart of the request and settlement process. If the certification unit M4 of the computer 10 of the art gallery A decides that the certification is possible in step S440, the notification unit M6 provides a notification, which indicates that the certification is possible, to the computer 20 of the print operator and the computer 30 of the art gallery B (step S510). In step S520, the payment request unit M5 generates and transmits a payment request for the license fee required when the art gallery B exhibits the reproduction image PI. That is, the art gallery A provides the art gallery B with the opportunity of obtaining the license required when exhibiting the reproduction image PI only when the accuracy of reproducibility of the reproduction image PI is certified. The payment request includes at least permission for the exhibition of the reproduction image PI in the art gallery B and the amount of a consideration for the certification. The amount of the consideration depends on the reproduction mode of the reproduction image PI, and a large amount is set in the spectral reflectance mode as compared with the color value mode. Furthermore, the payment request may include particulars such as a permitted exhibition period of the reproduction image PI, a designated light source under which the reproduction image PI is to be exhibited and the like. In addition, in the case of providing an indefinite exhibition period, it may be possible to clearly define a period, in which identification of the reproducibility can be ensured, by taking the difference between discoloration of the picture D and discoloration of the reproduction image PI into consideration. The payment request is transmitted to the computer 30 of the art gallery B. The payment request and the notification indicating that the certification is possible may also be simultaneously transmitted to the computer 30 of the art gallery B.

In the computer 20 of the print operator, the reception unit M11 receives the notification indicating that the certification is possible (step S530). Then, the consideration request unit M12 generates a consideration request of the reproduction image PI and transmits the consideration request to the computer 30 of the art gallery B (step S540). Furthermore, after receiving the notification indicating that the certification is possible, the computer 20 of the print operator transmits the reproduction image PI to the art gallery B. It may be possible to print a verification mark, which indicates that the certification has been completed, on the rear surface or blank space of the reproduction image PI. In addition, it may also be possible to set the amount of the consideration according to the reproduction mode. The computer 30 of the art gallery B receives the payment request from the computer 10 of the art gallery A and the consideration request from the computer 20 of the print operator (step S550), and the settlement unit M13 performs a settlement process with respect to the payment request and the consideration request (step S560). For example, the settlement unit M13 accesses a server (not shown) that manages bank accounts of the print operator and the art gallery A, and remits the money to the bank accounts. In this way, the request and settlement process is ended.

In accordance with this embodiment as described above, the art gallery B can exhibit the reproduction image PI of the picture D owned by the art gallery A. The spectral characteristics of the reproduction image PI are guaranteed by the certification of the art gallery A based on the measurement data MD. Thus, the reputation of the picture D can be prevented from being damaged due to the exhibition of a degraded reproduction image PI from the art gallery A's collection, and a faithful exhibition can be made in the art gallery B's exhibition. Meanwhile, the print operator prints the reproduction image PI with high accuracy, thereby obtaining the consideration for the printing of the reproduction image PI. When the reproduction mode is the spectral reflectance mode, the spectral reflectances $R(\lambda)$ of the picture D are reproduced, and even if the reproduction image PI is exhibited under certain light sources, the reproduction image PI has color values equal to those of the picture D under the light sources. Meanwhile, when the reproduction mode is the color value mode, the reproduction image PI exhibited under the designated light source has color values equal to those of the picture D under the reference light source. The spectral reflectance mode is better than the color value mode from the standpoint of the realization of complete reproducibility. However, in the state in which the art gallery B has to exhibit the reproduction image PI under a designated light source different from the reference light source of the art gallery A, it is preferable to select the color value mode after designating the designated light source different from the reference light source. In any case, the certification is performed based on the reproduction accuracy of a certification patch CC corresponding to pigments used for drawing or repairing the picture D, so that the entire reproduction accuracy of the picture D drawn using the pigment can be guaranteed with high reliability.

G. Spectral Printing Model

A prediction model (the spectral printing model) used by the printing unit M8 is for estimating spectral reflectances $R(\lambda)$, which are obtained when printing is performed at any ink amount sets $\phi$ ($d_c$, $d_m$, $d_y$, $d_k$, $d_{lc}$ and $d_{lm}$) available for the printer 28a of this embodiment, as the prediction spectral reflectances $R_s(\lambda)$, and corresponds to the function PM ($\phi$) of Equation 1 above.
In the spectral printing model, a color patch is actually printed by a standard machine (the printer 28a) as to a plurality of representative points on an ink amount space, and a spectral reflectance database RDB obtained by measuring spectral reflectances $R(\lambda)$ thereof by using a spectral reflectometer is prepared. Then, prediction using a cellular Yule-Nielsen Spectral Neugebauer model employing the spectral reflectance database RDB is performed, so that the spectral reflectance $R(\lambda)$ is accurately predicted when the printing is performed at any ink amount sets $\phi$ ($d_c$, $d_m$, $d_y$, $d_k$, $d_{lc}$ and $d_{lm}$).

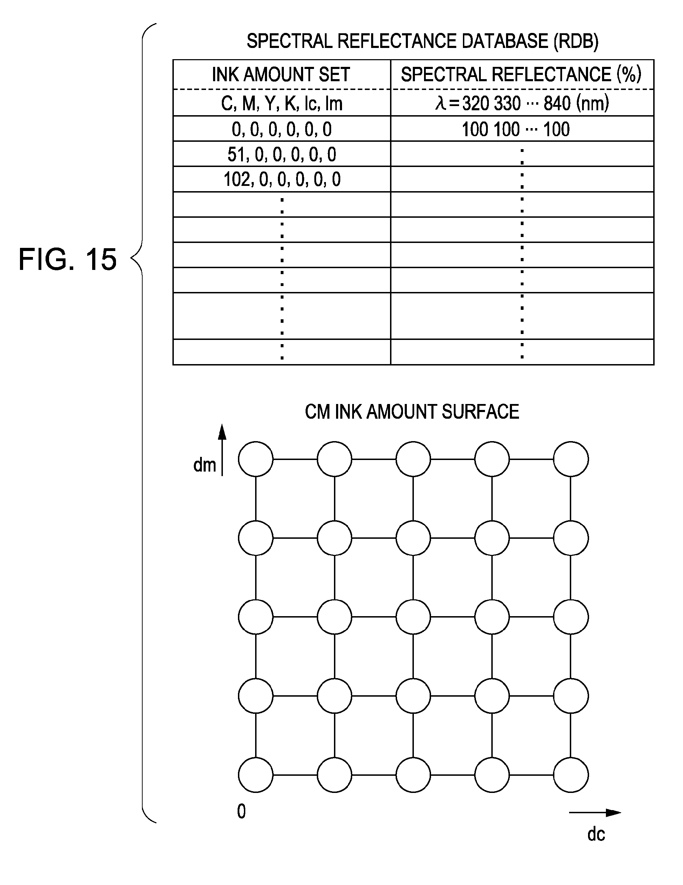

Fig. 15 shows the spectral reflectance database RDB.
As shown in Fig. 15, the spectral reflectance database RDB is a look-up table including the spectral reflectances $R(\lambda)$, which is obtained when printing and measurement are actually performed regarding the ink amount sets $\phi$ ($d_c$, $d_m$, $d_y$, $d_k$, $d_{lc}$ and $d_{lm}$) of a plurality of lattice points on the ink amount space (six dimensions in this embodiment, but only a CM surface is illustrated for the simplification of the drawing). For example, lattice points of 5 grids dividing each ink amount axis are generated. Herein, $5^{13}$ lattice points are generated, and a vast amount of the color patches are necessarily printed and measured. However, since the printer 28a actually has limitations on the number of the inks capable of being mounted at the same time or the amount of inks capable of being ejected at the same time, the number of the lattice points used in the printing and the measurement is reduced.
In addition, only a part of the lattice points is used for the printing and the measuring, and the spectral reflectances $R(\lambda)$ of the other lattice points are predicted based on the spectral reflectances $R(\lambda)$ of the lattice points which are actually used to perform the printing and the measurement, so that the number of the color patches on which the printing and the measurement are actually performed may be reduced. The spectral reflectance database RDB needs to be prepared for each printing paper with which the printer 28a can perform printing. Strictly speaking, this is because the spectral reflectances $R(\lambda)$ are determined by the spectral transmittance and the reflectance of the printing paper which are caused by an ink film (dot) formed on the printing paper, and are strongly influenced by the surface property (the dot shape depends thereon) or the reflectance of the printing paper. Next, the prediction by the cellular Yule-Nielsen Spectral Neugebauer Model in which the spectral reflectance database RDB is used will be described.
The printing unit M8 performs the prediction by the cellular Yule-Nielsen Spectral Neugebauer Model in which the spectral reflectance database RDB is used. In this prediction, the printing paper (the glossy paper in this embodiment) and the ink amount set $\phi$ are set as print conditions. When the prediction is performed on the glossy paper as the printing paper, the spectral reflectance database RDB created by printing the color patch on the glossy paper is set.
If the setting of the spectral reflectance database RDB is possible, the ink amount set $\phi$ ($d_c$, $d_m$, $d_y$, $d_k$, $d_{lc}$ and $d_{lm}$) output from the ink amount set $\phi$ calculating module M12 or the correction amount calculating module M16 is applied to the spectral printing model. The cellular Yule-Nielsen Spectral Neugebauer Model is based on the spectral Neugebauer model and the Yule-Nielsen model, which are well known. Furthermore, in the following description, a model in which 3 kinds of inks of CMY are used will be described for simple description. The same model is easily extended to a model using any ink amount set including the CMYKlclm according to this embodiment. In addition, as to the cellular Yule-Nielsen Spectral Neugebauer Model, Color Res Appl 25, 4-19, 2000 and R Balasubramanian, Optimization of the spectral Neugebauer model for printer characterization, J. Electronic Imaging 8(2), 156-166(1999) are cited.

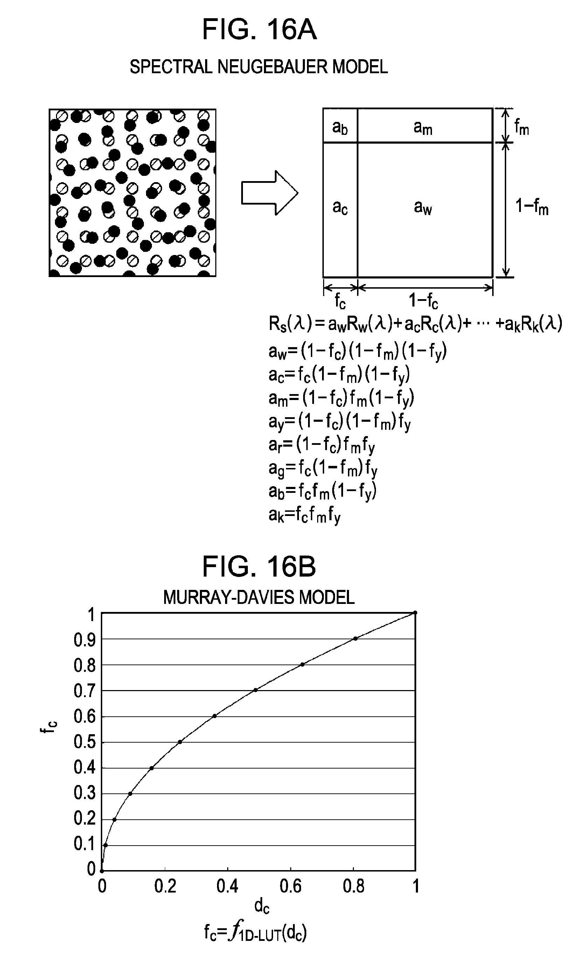

Figs. 16A and 16B are diagrams showing the spectral Neugebauer model. In the spectral Neugebauer model, the prediction spectral reflectances $R_s(\lambda)$ of a printed matter when the printing is performed at any ink amount set $\phi$ ($d_c$, $d_m$, $d_y$) is given by Equation 1 below.

Equation 1

$$R_s(\lambda) = a_w R_w(\lambda) + a_c R_c(\lambda) + a_m R_m(\lambda) + a_y R_y(\lambda)$$
$$+ a_r R_r(\lambda) + a_g R_g(\lambda) + a_b R_b(\lambda) + a_k R_k(\lambda) \qquad \cdots (1)$$

$a_w = (1-f_c)(1-f_m)(1-f_y)$

$a_c = f_c(1-f_m)(1-f_y)$

$$a_m = (1-f_c)f_m(1-f_y)$$

$$a_y = (1-f_c)(1-f_m)f_y$$

$$a_r = (1-f_c)f_m f_y$$

$$a_g = f_c(1-f_m)f_y$$

$$a_b = f_c f_m(1-f_y)$$

$$a_k = f_c f_m f_y)$$

In Equation 1, $a_i$ is an area ratio of the $i^{th}$ region, and $R_i(\lambda)$ is the spectral reflectance of the $i^{th}$ region. The suffix 'i' means a region (w) of no ink, a region (c) of the cyan ink only, a region (m) of the magenta ink only, a region (y) of the yellow ink only, a region (r) on which the magenta ink and the yellow ink are ejected, a region (g) on which the yellow ink and the cyan ink are ejected, a region (b) on which the cyan ink and the magenta ink are ejected, and a region (k) on which 3 colors of the CMY inks are ejected. In addition, $f_c$, $f_m$ and $f_y$ are the proportions of the areas (called as "ink area coverage"), each of which is covered with the ink when only one kind of the CMY inks is ejected.

The ink area coverage $f_c$, $f_m$ and $f_y$ are given by the Murray-Davies model shown in Fig. 16B. In the Murray-Davies model, for example, the ink area coverage $f_c$ of the cyan ink is a nonlinear function of the ink amount $d_c$ of the cyan ink. For example, the ink amount $d_c$ can be converted into the ink area coverage $f_c$ by a one-dimensional lookup table. The reason that ink area coverage $f_c$, $f_m$ and $f_y$ are a nonlinear function of the ink amounts $d_c$, $d_m$ and $d_y$ is that when a small amount of ink is ejected onto a unit area, the ink spreads sufficiently, whereas when a large amount of ink is ejected, the inks overlap with each other so that there is not much increase in the covered area. The other kinds of the MY inks are also the same.

When the Yule-Nielsen model is applied in relation to the spectral reflectance, Equation 1 above is rewritten as Equation 2a or Equation 2b below.

Equation 2

$$R_s(\lambda)^{1/n} = a_w R_w(\lambda)^{1/n} + a_c R_c(\lambda)^{1/n} + a_m R_m(\lambda)^{1/n} + a_y R_y(\lambda)^{1/n}$$
$$+ a_r R_r(\lambda)^{1/n} + a_g R_g(\lambda)^{1/n} + a_b R_b(\lambda)^{1/n} + a_k R_k(\lambda)^{1/n} \quad \cdots (2a)$$

$$R_s(\lambda) = \{a_w R_w(\lambda)^{1/n} + a_c R_c(\lambda)^{1/n} + a_m R_m(\lambda)^{1/n} + a_y R_y(\lambda)^{1/n}$$
$$+ a_r R_r(\lambda)^{1/n} + a_g R_g(\lambda)^{1/n} + a_b R_b(\lambda)^{1/n} + a_k R_k(\lambda)^{1/n}\}^n \quad \cdots (2b)$$

In Equation 2a and Equation 2b, n is a predetermined coefficient equal to or more than 1, and for example, n can be set to 10. Equation 2a and Equation 2b are equations representing the Yule-Nielsen Spectral Neugebauer Model.

The cellular Yule-Nielsen Spectral Neugebauer Model employed in this embodiment is obtained by dividing the ink color space of the Yule-Nielsen Spectral Neugebauer Model described above into plural cells.

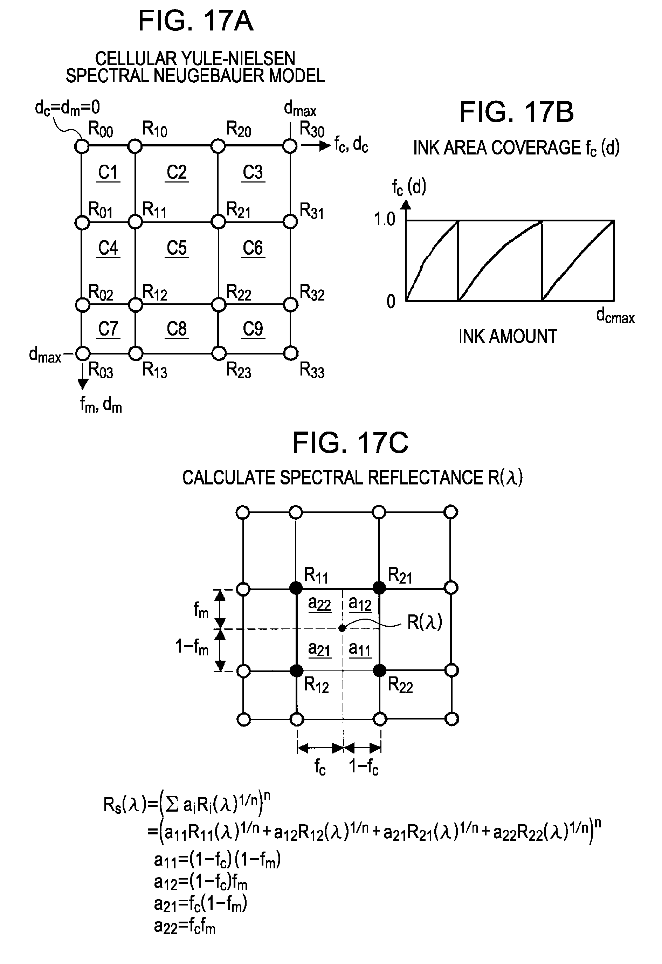

Fig. 17A shows an example of cell division in the cellular Yule-Nielsen Spectral Neugebauer Model. Herein, for simple description, the cell division is illustrated in a two-dimensional ink amount space including two axes of the ink amount $d_c$ and $d_m$ of the CM inks. Furthermore, since the ink area coverage $f_c$ and $f_m$ uniquely relate to the ink amount $d_c$ and $d_m$ in the Murray-Davies model described above, the ink area coverage $f_c$ and $f_m$ may be considered as the axes representing the ink area coverage $f_c$ and $f_m$. The white circles are the grid points (termed "lattice points") in the cell division. The two-dimensional ink amount (coverage) space is divided into nine cells C1 to C9. The ink amount set $\phi$ ($d_c$, $d_m$) corresponding to each lattice point is the ink amount set $\phi$ corresponding to the lattice point defined in the spectral reflectance database RDB. That is, by referring to the spectral reflectance database RDB described above, the spectral reflectances $R(\lambda)$ of each lattice point can be obtained. Therefore, the spectral reflectance $R(\lambda)$ 00, $R(\lambda)$ 10, $R(\lambda)$ 20 ... $R(\lambda)$ 33 of each lattice point can be obtained from the spectral reflectance database RDB.

In practice, the cell division in this embodiment is also performed in the six-dimensional ink amount space of the CMYKlclm inks, and the coordinates of each lattice point also are expressed by the six-dimensional ink amount set $\phi$ ($d_c$, $d_m$, $d_y$, $d_k$, $d_{lc}$ and $d_{lm}$). Then, the spectral reflectance $R(\lambda)$ of each lattice point corresponding to the ink amount set $\phi$ ($d_c$, $d_m$, $d_y$, $d_k$, $d_{lc}$ and $d_{lm}$) of each lattice point is obtained from the spectral reflectance database RDB (for example, the spectral reflectance database of the glossy paper).

Fig. 17B shows the relationship between the ink area coverage $f_c$ and the ink amount $d_c$ which are used in the cell division model. Herein, the ink amount range 0 to $d_{cmax}$ of one kind of ink is also divided into three sections, and the virtual ink area coverage $f_c$ used in the cell division model is obtained by the nonlinear curve which increases monotonically from 0 to 1 in every section. The ink area coverage $f_m$ and $f_y$ are also obtained with respect to other inks in the same manner.

Fig. 17C shows a calculation method of the prediction spectral reflectances $R_s(\lambda)$ when the printing is performed at any ink amount set $\phi$ ($d_c$, $d_m$) in a cell C5 located at the center position shown in Fig. 17A. When the printing is performed at the ink amount set $\phi$ ($d_c$, $d_m$), the spectral reflectances $R(\lambda)$ are given by Equation 3 below.

Equation 3

$$R_s(\lambda) = \left( \sum a_i \, R_i(\lambda)^{1/n} \right)^n$$
$$= \left( a_{11} R_{11}(\lambda)^{1/n} + a_{12} R_{12}(\lambda)^{1/n} + a_{21} R_{21}(\lambda)^{1/n} + a_{22} R_{22}(\lambda)^{1/n} \right)^n \quad \cdots (3)$$

$a_{11} = (1-f_c)(1-f_m)$

$a_{12} = (1-f_c)f_m$

$a_{21} = -f_c(1-f_m)$

$a_{22} = f_c f_m)$

In Equation 3, the ink area coverage $f_c$ and $f_m$ are values given by the graph shown in Fig. 17B. In addition, the spectral reflectances $R(\lambda)$ 11, ($\lambda$) 12, ($\lambda$) 21, and ($\lambda$) 22 corresponding to four lattice points surrounding the cell C5 can be obtained by referring to the spectral reflectance database RDB. Therefore, all the values constituting the right side of Equation 3 can be confirmed, and as the calculation result, when the printing is performed at any ink amount set $\phi$ ($d_c$, $d_m$), the prediction spectral reflectances $R_s(\lambda)$ can be calculated. The wavelength $\lambda$ is sequentially shifted in the visible wavelength band, so that the prediction spectral reflectances $R_s(\lambda)$ can be obtained in the visible wavelength band. When the ink amount space is divided into plural cells, the prediction spectral reflectances $R_s(\lambda)$ can be calculated with high accuracy as compared with the case of no division. As described above, the printing unit M8 can predict the prediction spectral reflectances $R_s(\lambda)$ according to the ink amount set $\phi$ sequentially updated.

H. Modified Example

H1. First Modified Example

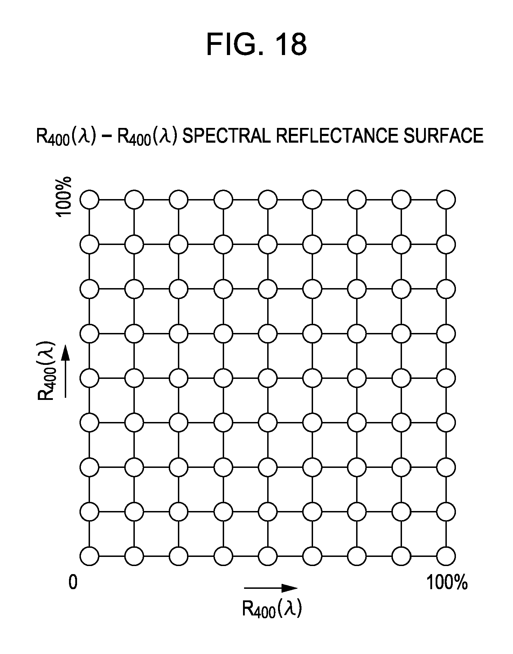

Fig. 18 is a schematic diagram of a spectral reflectance-ink amount table used for a color conversion process in accordance with the first modified example. The spectral reflectance-ink amount table 24c is stored in the HDD 23. The spectral reflectance-ink amount table 24c has an input space of a wavelength section number dimension, which employs spectral reflectances $R(\lambda)$ of each wavelength section as an axis, and an output space is a space of an ink amount set $\phi$. In the example of Fig. 18, spectral reflectances $R(\lambda)$ of other wavelength sections are constant (e.g., 50%), and the section of the input space, in which only spectral reflectance $R_{400}(\lambda)$ of a wavelength section $400\pm20$nm and only spectral reflectance $R_{440}(\lambda)$ of a wavelength section $440\pm20$nm are changed, is shown. In the section, lattice points (indicated by circles) are provided on each intersection point of the orthogonal lattice, and an ink amount set $\phi$ for reproducing spectral reflectance $R(\lambda)$ of each lattice point is set to correspond to the section.

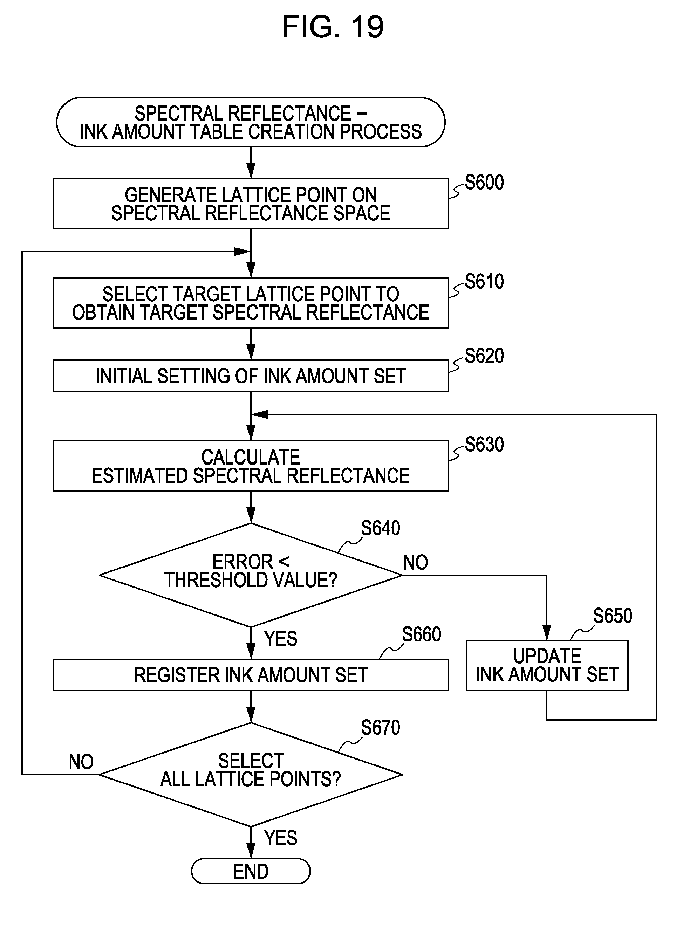

Fig. 19 is a flowchart showing a creating sequence of the spectral reflectance-ink amount table 24c. When creating the spectral reflectance-ink amount table 24c, the above-described spectral printing model is used. Basically, it is equal to the process for calculating the ink amount set $\phi$ for reproducing the spectral reflectances $R(\lambda)$ of each pixel in the above-described color conversion process. First, lattice points are generated on the orthogonal lattice points of the input space of the above-described spectral reflectances $R(\lambda)$ (step S600). Herein, the lattice points having the number, which is obtained by squaring the number of lattice points by the wavelength sections, are generated. After the lattice points are generated, any one of the lattice points is selected as a target lattice point, and spectral reflectances $R(\lambda)$ of the target lattice point are obtained as target spectral reflectances $R_t(\lambda)$ (step S610). Next, an appropriate ink amount set $\phi$ is initially set in the spectral printing model (step S620), and spectral reflectances $R(\lambda)$ calculated by the

initial setting are obtained as prediction spectral reflectances $R_s(\lambda)$ (step S630) It is determined whether an error between the target spectral reflectances $R_t(\lambda)$ and the prediction spectral reflectances $R_s(\lambda)$ is smaller than a predetermined threshold value (step S640).

In addition, the threshold value is small to the extent that the target spectral reflectances $R_t(\lambda)$ may be regarded to be equal to the prediction spectral reflectances $R_s(\lambda)$. When the error is larger than the threshold value, the ink amount set $\lambda$ is updated (step S650), and step S630 is performed. That is, it is determined whether the error is smaller than the threshold value with respect to the updated ink amount set $\phi$. When the error is equal to or less than the threshold value, the current ink amount set $\phi$ is employed as a solution and this ink amount set $\phi$ is registered in the spectral reflectance-ink amount table 24c as an ink amount set $\phi$ corresponding to a target lattice point (step S660). If the ink amount set $\phi$ is registered with respect to the target lattice point, it is determined whether all lattice points have been selected as the target lattice point (step S670). When not all the lattice points have been selected, step S610 is performed and a process is performed to obtain a solution of an ink amount set $\phi$ with respect to the next target lattice point. Also, in step S620, a solution of an ink amount set $\phi$ with respect to a just previous lattice point may be initially set with respect to the current target lattice point. Furthermore, the update of an ink amount set $\phi$ may also be performed using the Jacobian matrix. The registration of ink amount sets $\phi$ corresponding to all lattice points is completed, resulting in the completion of the spectral reflectance-ink amount table 24c. In addition, as to all lattice points of the input space of the spectral reflectances $R(\lambda)$, there exist no ink amount sets $\phi$ with which the spectral reflectances $R(\lambda)$ of the lattice points are reproducible. Thus, when the error is not smaller than the threshold value even if the update of the ink amount set $\phi$ is repeated by the predetermined number of times, the lattice point is removed from the spectral reflectance-ink amount table 24c. Therefore, a region where there exist the lattice points registered in the spectral reflectance-ink amount table 24c indicates the range of the spectral reflectances $R(\lambda)$ which are reproducible by the printer 28a.

An interpolation operation is performed with reference to the spectral reflectance-ink amount table 24c created as described above, so that the printing unit M8 can obtain ink amount sets $\phi$ corresponding to the spectral reflectances $R(\lambda)$ of each pixel. In addition, as to certain pixels, when spectral reflectances $R(\lambda)$ out of the range of the spectral reflectances $R(\lambda)$ which are reproducible by the printer 28a are input, the printing may be stopped because it may be determined that the inputted image data ID is not reproducible. Furthermore, as to the pixels, color conversion equal to that in the color value mode may also be performed.

H2. Second Modified Example

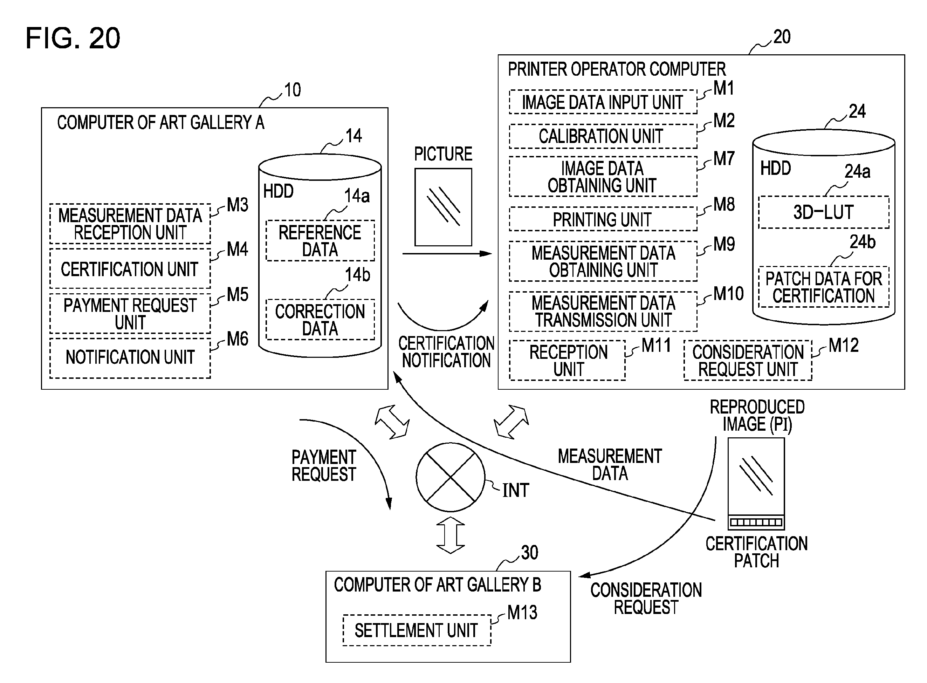

Fig. 20 shows a software configuration and main data which are controlled by the computers 10, 20 and 30. In the computer 10 of the art gallery A, the measurement data reception unit M3, the certification unit M4, the payment request unit M5, and the notification unit M6 are controlled. In the computer 20 of the print operator, the image data input unit M1, the calibration unit M2, the image data obtaining unit M7, the printing unit M8, the measurement data obtaining unit M9, the measurement data transmission unit M10, the reception unit M11, and the consideration request unit M12 are controlled. In this modified example, the image data input unit M1 and the calibration unit M2 are executed in the computer 20 of the print operator instead of the computer 10 of the art gallery A, differently from the previous embodiment. Therefore, the image input process is performed in the computer 20 of the print operator. As described above, the print operator may be requested to perform the procedure from the generation of the image data ID to the printing of the reproduction image PI, and only the certification process may be performed by the computer 10 of the art gallery A. In the previous embodiment, the reproduction image PI destined to be exhibited is printed. However, even in the case of manufacturing goods (e.g., an underlay, a mouse pad and the like) having the reproduction image PI of the picture D owned by the art gallery A as a pattern, the certification process can be performed with respect to the reproduction image PI printed as a pattern.

**Claims**

**1.** A printing apparatus (20) comprising:

an obtaining unit (M7) that obtains an image data of an image;
a printing unit (M8) that prints patches showing spectral characteristics of reference pigments used for the image; and
a consideration request unit (M12) that outputs a consideration request for a consideration of printing the image based on the obtained image data, wherein the consideration request is based on a certification notification with respect to measured spectral characteristics of the patches printed.

**2.** The printing apparatus according to claim 1, wherein the spectral characteristics include a plurality of spectral reflectances or color values.

3. The printing apparatus according to claim 1 or 2,
   wherein the image data obtained by the obtaining unit includes spectral characteristics of the reference pigments used for the image.

4. The printing apparatus according to any one of claims 1 to 3, wherein
   the image data of the image includes spectral characteristics of the obtained image, and
   the printing unit (M8) specifies an ink amount used for printing the patches by referring to a look-up table that specifies a correspondence relation of the spectral characteristics obtained by the obtaining unit and the ink amount.

5. The printing apparatus according to claim 4, wherein the look-up table is a table in which the ink amount is specified for each of a plurality of spectral reflectances defined by a combination of reflectances in a plurality of wavelength ranges.

6. The printing apparatus according to any one of claims 1 to 5, further comprising a measurement unit (M9) that measures the spectral characteristics of the patches printed.

7. The printing apparatus according to any one of claims 1 to 6, further comprising
   a data output unit (M10) that outputs the measured spectral characteristics of the patches printed, and
   a data obtaining unit (M11) that obtains the certification notification based on the measured spectral characteristics of the patches printed.

8. The printing apparatus according to any one of claims 1 to 7, wherein the printing unit (M8) prints the image based on the obtained image data and a verification mark in accordance with the certification notification.

9. The printing apparatus according to any one of claims 1 to 8, wherein the consideration request unit (M12) determines the consideration of printing based on a reproduction mode to print the image, wherein the reproduction mode is either one of spectral reflectance mode or color value mode.

10. A printing method using a printer, the method comprising:

    obtaining an image data of an image;
    printing patches showing the spectral characteristics of reference pigments used for the image; and
    outputting a consideration request for a consideration of printing the image based on the obtained image data, wherein the consideration request is based on certification notification with respect to measured spectral characteristics of the patches printed.

11. A computer-readable recording medium recording a program thereon, the program prompting a computer to execute functions of:

    obtaining an image data of an image;
    printing patches showing spectral characteristics of reference pigments used for the image; and
    outputting a consideration request for a consideration of printing the image based on the obtained image data, wherein the consideration request is based on a certification notification with respect to measured spectral characteristics of the patches printed.

# FIG. 1

COMPUTER OF
ART GALLERY A — 10

INT

COMPUTER OF
GALLERY B — 30

PRINTER
OPERATOR
COMPUTER — 20

# FIG. 2

10, 20, 30

11, 21, 31 — CPU

12, 22, 32 — RAM

13, 23, 33 — ROM

14, 24, 34 — HDD / PROGRAM DATA

19, 29, 39 (bus)

15, 25, 35 — COMMUNICATION INTERFACE (I/F)

16, 26, 36 — VIDEO INTERFACE (I/F) → DISPLAY (16a, 26a, 36a)

17, 27, 37 — INPUT APPARATUS INTERFACE (I/F) → KEYBOARD (17a, 27a, 37a), MOUSE (17b, 27b, 37b)

18, 28 — GENERAL PURPOSE INTERFACE (I/F) → PRINTER (28a), SPECTRAL REFLECTOMETER (18b, 28b)

EP 2 302 898 A2

# FIG. 3

COMPUTER OF ART GALLERY A — 10

- IMAGE DATA INPUT UNIT — M1
- CALIBRATION UNIT — M2
- MEASUREMENT DATA RECEPTION UNIT — M3
- CERTIFICATION UNIT — M4
- PAYMENT REQUEST UNIT — M5
- NOTIFICATION UNIT — M6

HDD — 14
- REFERENCE DATA — 14a
- CORRECTION DATA — 14b

PICTURE

IMAGE DATA

CERTIFICATION NOTIFICATION

PRINTER OPERATOR COMPUTER — 20

- IMAGE DATA OBTAINING UNIT — M7
- PRINTING UNIT — M8
- MEASUREMENT DATA OBTAINING UNIT — M9
- MEASUREMENT DATA TRANSMISSION UNIT — M10
- RECEPTION UNIT — M11
- CONSIDERATION REQUEST UNIT — M12

HDD — 24
- 3D-LUT — 24a
- PATCH DATA FOR CERTIFICATION — 24b

MODIFIED EXAMPLE 1

REPRODUCED IMAGE (PI)

SPECTRAL REFLECTANCE – INK AMOUNT TABLE — 24c

CERTIFICATION PATCH (CC)

PAYMENT REQUEST

MEASUREMENT DATA

INT

CONSIDERATION REQUEST

COMPUTER OF ART GALLERY B — 30
- SETTLEMENT UNIT — M13

EP 2 302 898 A2

# FIG. 4

```
       ┌─────────────────────────┐
       │    ENTIRE PROCEDURE     │
       └─────────────────────────┘
                    │
                    ▼
    ┌─────────────────────────────┐  S100
    │     IMAGE INPUT PROCESS     │
    └─────────────────────────────┘
                    │
                    ▼
    ┌─────────────────────────────┐  S200
    │      PRINTING PROCESS       │
    └─────────────────────────────┘
                    │
                    ▼
    ┌─────────────────────────────┐  S300
    │    MEASUREMENT PROCESS      │
    └─────────────────────────────┘
                    │
                    ▼
    ┌─────────────────────────────┐  S400
    │   CERTIFICATION PROCESS     │
    └─────────────────────────────┘
                    │
                    ▼
    ┌─────────────────────────────┐  S500
    │        REQUEST AND          │
    │    SETTLEMENT PROCESS       │
    └─────────────────────────────┘
                    │
                    ▼
            ┌──────────────┐
            │     END      │
            └──────────────┘
```

# FIG. 5

IMAGE INPUT PROCESS — S100

MEASURE REFERENCE SAMPLE — S110

GENERATE CORRECTION DATA — S120

GENERATE IMAGE DATA — S130

NEW CORRECTION DATA? — S140

NO

YES

CORRECT IMAGE DATA — S150

APPEND CERTIFICATION FLAG — S160

APPEND REFERENCE LIGHT SOURCE INFORMATION — S170

TRANSMIT IMAGE DATA — S180

RETURN

# FIG. 6

14a

| WAVELENGTH λ [nm] | REFERENCE SPECTRAL REFLECTANCE Ri(λ) [%] |
|---|---|
| 320±20 | 50 |
| 360±20 | 50 |
| 400±20 | 50 |
| 440±20 | 50 |
| 480±20 | 50 |
| 520±20 | 50 |
| ⋮ | ⋮ |

| WAVELENGTH λ [nm] | CONFIRMATION SPECTRAL REFLECTANCE Rc(λ) [%] |
|---|---|
| 320±20 | 51 |
| 360±20 | 50 |
| 400±20 | 52 |
| 440±20 | 47 |
| 480±20 | 50 |
| 520±20 | 51 |
| ⋮ | ⋮ |

14b

| WAVELENGTH λ [nm] | CORRECTION VALUE Rm(λ) [%] |
|---|---|
| 320±20 | −1 |
| 360±20 | 0 |
| 400±20 | −2 |
| 440±20 | 3 |
| 480±20 | 0 |
| 520±20 | −1 |
| ⋮ | ⋮ |

# FIG. 7

| ↓ WAVELENGTH λ [nm] | SPECTRAL REFLECTANCE R(λ) [%] | | | | | ID |
| --- | --- | --- | --- | --- | --- | --- |
| PIXEL (POSITION (x, y)) [μm] → | (0, 0) | (10, 0) | (20, 0) | (30, 0) | (40, 0) | ··· |
| 320 ± 20 | 32 | 31 | 31 | 32 | 30 | ··· |
| 360 ± 20 | 37 | 37 | 37 | 37 | 37 | ··· |
| 400 ± 20 | 29 | 29 | 29 | 29 | 29 | ··· |
| 440 ± 20 | 37 | 37 | 37 | 37 | 37 | ··· |
| 480 ± 20 | 40 | 40 | 40 | 40 | 41 | ··· |
| 520 ± 20 | 40 | 40 | 41 | 41 | 42 | ··· |
| ⋮ | ⋮ | ⋮ | ⋮ | ⋮ | ⋮ | |

# FIG. 8

```
        ( PRINTING PROCESS )  S200

          RECEIVE IMAGE DATA    S205

NO              APPEND          S210
        CERTIFICATION FLAG?

( END )         YES
                                S220
          OBTAIN IMAGE DATA

          CONVERT IMAGE SIZE    S230

   PATCH DATA LAYOUT FOR CERTIFICATION   S235

COLOR VALUE MODE                         S240
              REPRODUCTION MODE?
```

**S260**

SPECTRAL REFLECTANCE MODE — **S250**

| COLOR VALUE MODE (S260) | SPECTRAL REFLECTANCE MODE (S250) |
|---|---|

**S260a** SELECT TARGET IMAGE TO OBTAIN TARGET SPECTRAL REFLECTANCE

**S250a** SELECT TARGET IMAGE TO OBTAIN TARGET SPECTRAL REFLECTANCE

**S260b** CALCULATE TARGET COLOR VALUE

**S250b** INITIAL SETTING OF INK AMOUNT SET

**S260c** OBTAIN INK AMOUNT SET WITH REFERENCE TO 3D-LUT OF DESIGNATED LIGHT SOURCE

**S250c** CALCULATE ESTIMATED SPECTRAL REFLECTANCE

**S260d** STORE INK AMOUNT SET

**S250d** ERROR < THRESHOLD VALUE? — NO → **S250e** UPDATE INK AMOUNT SET

**S260e** SELECT ALL PIXELS? — NO

YES

**S250f** STORE INK AMOUNT SET

**S250g** SELECT ALL PIXELS? — NO

YES

HALFTONE PROCESS — **S270**

RASTERIZATION PROCESS — **S280**

PERFORM PRINTING — **S290**

( RETURN )

# FIG. 9

PRINT IMAGE DATA

ID

24b

CC          CC          CC

# FIG. 10

| COLOR VALUE | | | INK AMOUNT SET | | | | | | | |
|---|---|---|---|---|---|---|---|---|---|---|
| L* | a* | b* | C | M | Y | K | Ic | Im | |
| 53 | 6 | −21 | 235 | 127 | 61 | 126 | 227 | 44 | |
| 36 | 20 | 47 | 125 | 238 | 222 | 142 | 35 | 84 | |
| 82 | −9 | −40 | 175 | 158 | 183 | 192 | 106 | 79 | |
| ⋮ | ⋮ | ⋮ | ⋮ | ⋮ | ⋮ | ⋮ | ⋮ | ⋮ | |

24a, F11
24a, A
24a, D65
24a, D60
24a, D55

EP 2 302 898 A2

# FIG. 11

$\phi\,(d_c,\,d_m,\,d_y,\,d_k,\,d_{lc},\,d_{lm,})$

EP 2 302 898 A2

# FIG. 12

MEASUREMENT PROCESS — S300

MEASURE COLOR PATCH
FOR CERTIFICATION — S310

REPRODUCTION
MODE? — S315

COLOR VALUE MODE

SPECTRAL
REFLECTANCE MODE

CALCULATE COLOR VALUE
UNDER DESIGNATED
LIGHT SOURCE — S335

STORE COLOR VALUE
IN MEASUREMENT DATA — S340

APPEND
TARGET COLOR VALUE — S350

STORE
SPECTRAL REFLECTANCE
IN MEASUREMENT DATA — S320

APPEND TARGET
SPECTRAL REFLECTANCE — S330

TRANSMIT
MEASUREMENT DATA — S360

RETURN

# FIG. 13

CERTIFICATION PROCESS ⟶ S400

↓

RECEIVE
MEASUREMENT DATA ⟶ S410

↓

REPRODUCTION
MODE? ⟶ S420

COLOR VALUE MODE ←

SPECTRAL
REFLECTANCE MODE

CALCULATE
COLOR VALUE ERROR
(COLOR DIFFERENCE) ⟶ S450

CALCULATE SPECTRAL
REFLECTANCE ERROR ⟶ S430

↓

ERROR
(COLOR DIFFERENCE)
≤THRESHOLD
VALUE? ⟶ S440

NO ←

YES

TRANSMIT NOTIFICATION
REPRESENTING THAT
CERTIFICATION IS NOT
PERMITTED ⟶ S460

↓

RETURN

## FIG. 14

REQUEST AND SETTLEMENT PROCESS (ART GALLERY A)

REQUEST AND SETTLEMENT PROCESS (ART GALLERY B)

REQUEST AND SETTLEMENT PROCESS (PRINTER OPERATOR) — S500

S510 — TRANSMIT NOTIFICATION REPRESENTING THAT CERTIFICATION IS PERMITTED

S530 — RECEIVE NOTIFICATION REPRESENTING THAT CERTIFICATION IS PERMITTED

S520 — GENERATE AND TRANSMIT PAYMENT REQUEST

S540 — GENERATE AND TRANSMIT CONSIDERATION REQUEST

S550 — RECEIVE PAYMENT REQUEST AND CONSIDERATION REQUEST

S560 — SETTLEMENT

RETURN

RETURN

RETURN

EP 2 302 898 A2

## SPECTRAL REFLECTANCE DATABASE (RDB)

| INK AMOUNT SET | SPECTRAL REFLECTANCE (%) |
|---|---|
| C, M, Y, K, Ic, Im | $\lambda = 320\ 330\ \cdots\ 840$ (nm) |
| 0, 0, 0, 0, 0, 0 | 100 100 ⋯ 100 |
| 51, 0, 0, 0, 0, 0 | ⋮ |
| 102, 0, 0, 0, 0, 0 | ⋮ |
| ⋮ | ⋮ |
| | ⋮ |
| ⋮ | ⋮ |
| | ⋮ |
| ⋮ | ⋮ |
| ⋮ | ⋮ |

FIG. 15

CM INK AMOUNT SURFACE

# FIG. 16A

## SPECTRAL NEUGEBAUER MODEL

$$R_s(\lambda)=a_wR_w(\lambda)+a_cR_c(\lambda)+\cdots+a_kR_k(\lambda)$$
$$a_w=(1-f_c)(1-f_m)(1-f_y)$$
$$a_c=f_c(1-f_m)(1-f_y)$$
$$a_m=(1-f_c)f_m(1-f_y)$$
$$a_y=(1-f_c)(1-f_m)f_y$$
$$a_r=(1-f_c)f_mf_y$$
$$a_g=f_c(1-f_m)f_y$$
$$a_b=f_cf_m(1-f_y)$$
$$a_k=f_cf_mf_y$$

# FIG. 16B

## MURRAY-DAVIES MODEL

$$f_c=f_{\text{1D-LUT}}(d_c)$$

## FIG. 17A

### CELLULAR YULE-NIELSEN SPECTRAL NEUGEBAUER MODEL

$d_c = d_m = 0$

$$R_{00} \quad R_{10} \quad R_{20} \quad R_{30} \quad d_{max}$$

$f_c, d_c$

|  |  |  |
|----|----|----|
| C1 | C2 | C3 |

$$R_{01} \quad R_{11} \quad R_{21} \quad R_{31}$$

|  |  |  |
|----|----|----|
| C4 | C5 | C6 |

$$R_{02} \quad R_{12} \quad R_{22} \quad R_{32}$$

|  |  |  |
|----|----|----|
| C7 | C8 | C9 |

$d_{max}$

$$R_{03} \quad R_{13} \quad R_{23} \quad R_{33}$$

$f_m, d_m$

## FIG. 17B

### INK AREA COVERAGE $f_c$ (d)

$f_c$ (d)

1.0

0

$d_{cmax}$

INK AMOUNT

## FIG. 17C

### CALCULATE SPECTRAL REFLECTANCE R(λ)

$f_m$

$1 - f_m$

$$R_{11} \quad R_{21}$$
$$a_{22} \quad a_{12}$$
$$R(\lambda)$$
$$a_{21} \quad a_{11}$$
$$R_{12} \quad R_{22}$$

$f_c$   $1 - f_c$

$$R_s(\lambda) = \left( \sum a_i R_i(\lambda)^{1/n} \right)^n$$
$$= \left( a_{11}R_{11}(\lambda)^{1/n} + a_{12}R_{12}(\lambda)^{1/n} + a_{21}R_{21}(\lambda)^{1/n} + a_{22}R_{22}(\lambda)^{1/n} \right)^n$$
$$a_{11} = (1-f_c)(1-f_m)$$
$$a_{12} = (1-f_c)f_m$$
$$a_{21} = f_c(1-f_m)$$
$$a_{22} = f_c f_m$$

# FIG. 18

$R_{400}(\lambda) - R_{400}(\lambda)$ SPECTRAL REFLECTANCE SURFACE

# FIG. 19

```
       ╭─────────────────────────────────────╮
       │   SPECTRAL REFLECTANCE –            │
       │  INK AMOUNT TABLE CREATION PROCESS  │
       ╰─────────────────────────────────────╯
                        │
                        ▼
       ┌─────────────────────────────────────┐  S600
       │      GENERATE LATTICE POINT ON      │
       │    SPECTRAL REFLECTANCE SPACE       │
       └─────────────────────────────────────┘
                        │
                        ▼
       ┌─────────────────────────────────────┐  S610
       │    SELECT TARGET LATTICE POINT TO   │
       │ OBTAIN TARGET SPECTRAL REFLECTANCE  │
       └─────────────────────────────────────┘
                        │
                        ▼
       ┌─────────────────────────────────────┐  S620
       │     INITIAL SETTING OF INK AMOUNT SET │
       └─────────────────────────────────────┘
                        │
                        ▼
       ┌─────────────────────────────────────┐  S630
       │            CALCULATE                │
       │   ESTIMATED SPECTRAL REFLECTANCE    │
       └─────────────────────────────────────┘
                        │
                        ▼            S640
                    ◇─────────◇
                   ◇  ERROR <  ◇──── NO ──────┐
                   ◇ THRESHOLD ◇              │
                    ◇ VALUE? ◇                │
                        │                     ▼        S650
                       YES            ┌──────────────┐
                        │   S660      │    UPDATE    │
       ┌─────────────────────────┐    │ INK AMOUNT SET│
       │  REGISTER INK AMOUNT SET│    └──────────────┘
       └─────────────────────────┘
                        │
                        ▼            S670
                    ◇─────────◇
         NO ────────◇  SELECT  ◇
                    ◇ALL LATTICE POINTS?◇
                    ◇─────────◇
                        │
                       YES
                        ▼
                    ╭───────╮
                    │  END  │
                    ╰───────╯
```

# FIG. 20

COMPUTER OF ART GALLERY A — 10

HDD — 14
- REFERENCE DATA — 14a
- CORRECTION DATA — 14b

- MEASUREMENT DATA RECEPTION UNIT — M3
- CERTIFICATION UNIT — M4
- PAYMENT REQUEST UNIT — M5
- NOTIFICATION UNIT — M6

PICTURE

CERTIFICATION NOTIFICATION

PRINTER OPERATOR COMPUTER — 20
- IMAGE DATA INPUT UNIT — M1
- CALIBRATION UNIT — M2
- IMAGE DATA OBTAINING UNIT — M7
- PRINTING UNIT — M8
- MEASUREMENT DATA OBTAINING UNIT — M9
- MEASUREMENT DATA TRANSMISSION UNIT — M10
- RECEPTION UNIT — M11
- CONSIDERATION REQUEST UNIT — M12

HDD — 24
- 3D-LUT — 24a
- PATCH DATA FOR CERTIFICATION — 24b

PAYMENT REQUEST

INT

MEASUREMENT DATA

REPRODUCED IMAGE (PI)

CERTIFICATION PATCH

COMPUTER OF ART GALLERY B — 30
- SETTLEMENT UNIT — M13

CONSIDERATION REQUEST

EP 2 302 898 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006146687 A

**Non-patent literature cited in the description**

- Yule-Nielsen Spectral Neugebauer Model. *Color Res Appl,* 2000, vol. 25, 4-19

- **R Balasubramanian.** Optimization of the spectral Neugebauer model for printer characterization. *J. Electronic Imaging,* 1999, vol. 8 (2), 156-166